(19) Europäisches Patentamt
European Patent Office
Office européen des brevets

(11) EP 1 130 063 A1

(12) **EUROPEAN PATENT APPLICATION**
published in accordance with Art. 158(3) EPC

(43) Date of publication:
**05.09.2001 Bulletin 2001/36**

(21) Application number: **00961022.1**

(22) Date of filing: **14.09.2000**

(51) Int Cl.7: **C09B 23/14**, B41M 5/26

(86) International application number:
**PCT/JP00/06312**

(87) International publication number:
**WO 01/19923 (22.03.2001 Gazette 2001/12)**

(84) Designated Contracting States:
**AT BE CH CY DE DK ES FI FR GB GR IE IT LI LU MC NL PT SE**

(30) Priority: **14.09.1999 JP 25985799**
**16.05.2000 JP 2000143035**

(71) Applicant: **KABUSHIKI KAISHA HAYASHIBARA SEIBUTSU KAGAKU KENKYUJO**
**Okayama-shi Okayama (JP)**

(72) Inventors:
- **KASADA, Chiaki**
  **Okayama-shi, Okayama 703-8265 (JP)**
- **DAN-OH, Yasufumi**
  **Okayama-shi, Okayama 703-8282 (JP)**
- **KAWATA, Toshio**
  **Okayama-shi, Okayama 700-0941 (JP)**
- **YASUI, Shigeo**
  **Okayama-shi, Okayama 702-8044 (JP)**

(74) Representative: **Daniels, Jeffrey Nicholas et al**
**Page White & Farrer**
**54 Doughty Street**
**London WC1N 2LS (GB)**

(54) **STYRYL DYE**

(57) The present invention provides styryl dyes which exert satisfactory recording properties in high-density optical recording media, and uses thereof. These are solved by providing dimethine styryl dyes having specific structures, light absorbents and optical recording media which comprise the dimethine styryl dyes, and a process for producing the dimethine styryl dyes which comprises a step of reacting an aromatic amine compound having an aldehyde group with either a 3,3-dimethylbenzoindolium compound having an active methyl group or a 3,3-dimethylindolium compound having an aminosulfonyl group.

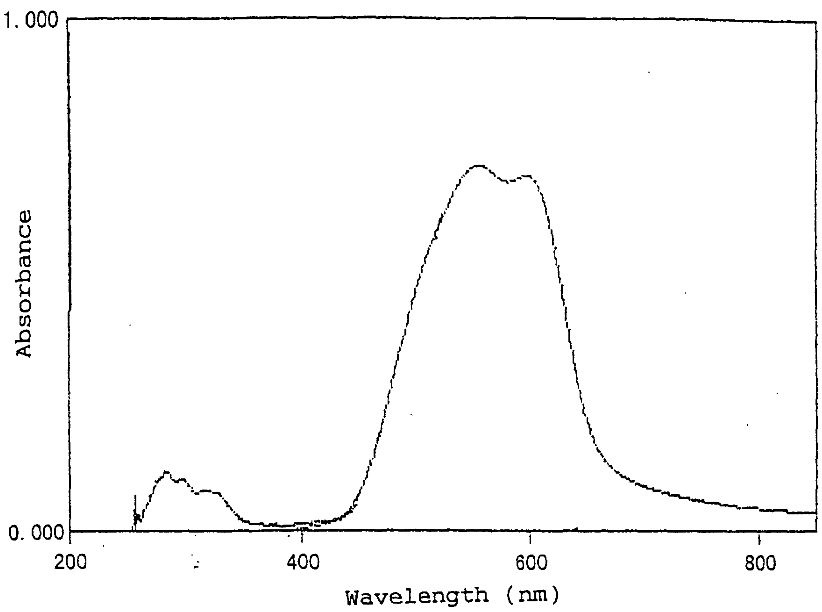


FIG. 1

EP 1 130 063 A1

## Description

### Technical Field

The present invention relates to organic dye compounds, and more particularly to dimethine styryl dyes which are useful as light absorbents in optical recording media.

### Background Art

In a multimedia age, optical recording media such as CD-Rs (a write-once memory using compact disc) and DVD-Rs (a write-once memory using digital video disc) are now greatly highlighted. Optical recording media can be roughly classified into inorganic ones which have recording layers composed of inorganic substances such as tellurium, selenium, rhodium, carbon, or carbon sulfide; and organic ones which have recording layers composed of light absorbents composed of organic dye compounds mainly.

Among these optical recording media, the organic optical recording media are generally prepared by dissolving a polymethine dye in an organic solvent such as 2,2,3,3-tetrafluoro-1-propanol (abbreviated as "TFP" hereinafter), coating the solution on the surface of a polycarbonate substrate, drying the coated solution into a recording layer, and sequentially forming and attaching closely on the surface of the recording layer both a reflection layer made of a metal such as gold, silver or copper and a protection layer made of an ultraviolet hardening resin. In comparison with inorganic optical recording media, organic ones have the drawback that their recording layers are susceptible to change under environmental lights such as reading- and natural-lights, but have the merit that they can be manufactured in a lesser cost because their recording layers can be formed by directly coating light absorbents in a solution form on the surface of substrates. In addition, organic optical recording media are now becoming the predominant low-cost optical recording media because they are mainly composed of organic substances which are substantially free of corrosion even when contacted with moisture and sea water and because information recorded therein in a prescribed format can be readout using commercialized read-only readers by the establishment of thermal-deformation-type optical recording media, a kind of organic optical recording medium.

What is urgently required in organic optical recording media is to increase their recording capacity to meet this multimedia age. The research for such an increment, which is now being eagerly continued mainly in this field, is to shorten the wavelength of 775-795 nm, that is irradiated by conventional GaAlAs semiconductor lasers, to a wavelength of 700 nm or shorter in order to increase the recording capacity per one side of optical recording media to a level of 4.7 GB (giga bytes) or more. However, most of conventional polymethine dyes, explored for CD-Rs, could not be appropriately readout and written information by using laser beams with wavelengths of 700 nm or shorter when used in high-density optical recording media such as DVD-Rs. Thus, the polymethine dyes being now used could not fulfil the need of high-storage densification desired in many fields.

As another causative for spoiling the high-storage densification of organic optical recording media, there exist problems of thermal decomposition and heat resistance of polymethine dyes. In organic optical recording media, pits are formed by using heat generated when dyes absorb laser beams and then melt and decompose. However, since the melting point and the decomposition point of most conventional polymethine dyes are different and their thermal difference is quite high, the formation of pits by laser beams is not sharp or uniform and the heat of melting and decomposition conducts to the area around the irradiated points and may easily distort the previously-formed adjacent pits. In addition, most of conventional polymethine dyes have a rather lower decomposition-point, and this results in a problem that the part around the pits and the other pit-less part on the recording surface may be easily deformed by the accumulated heat, that is generated when the polymethine dyes are exposed to reading laser beams for a relatively-long period of time, because the dyes have a relatively-low heat resistance.

In view of the foregoing, the object of the present invention is to provide an organic dye compound which exerts excellent recording characteristics when used in high-density optical recording media, and to provide uses thereof.

### Disclosure of Invention

To attain the above object, the present inventors eagerly studied and screened compounds. As a result, they found that particular dimethine styryl dyes (may be called "styryl dyes" hereinafter), which are obtainable through a step of reacting an aromatic amine compound having an aldehyde group with a 3,3-dimethylbenzoindolium compound having an active methyl group or a 3,3-dimethylindolium compound having an aminosulfonyl group, have absorption maxima in the visible region, and substantially absorb a visible light with a wavelength around 650 nm when in a thin-layer form. They also found that, unlike conventional related compounds, most of the polymethine dyes of the present invention have the following features: They have only decomposition points or decomposition points undistinguishable

from their melting points, have significantly-higher decomposition points and heat resistance than those of conventional related compounds, and promptly decompose at temperatures around their decomposition points. The present inventors confirmed that the styryl dyes in optical recording media form minute pits on the recording surfaces stably, promptly, and at a relatively-high density when irradiated with laser beams at wavelengths around 650 nm. The present invention was made based on the creation of novel organic dye compounds and the discovery of their industrially-useful characteristics.

Brief Description of Drawings

FIG. 1 is a visible absorption spectrum of one of the styryl dyes of the present invention when in a thin-layer form.
FIG. 2 is a visible absorption spectrum of a conventional related compound when in a thin-layer form.
FIG. 3 is the results on DTA and TGA for one of the styryl dyes of the present invention.
FIG. 4 is the results on DTA and TGA for a conventional styryl dye.

Best Mode for Carrying out the Invention

The present invention solves the above object by providing the styryl dyes represented by either Formulae 1 to 3, and more particularly, by providing styryl dyes which substantially absorb a visible light with a wavelength around 650 nm when in a thin-layer form, and have only decomposition points or decomposition points undistinguishable from their melting points.

Formula 1:

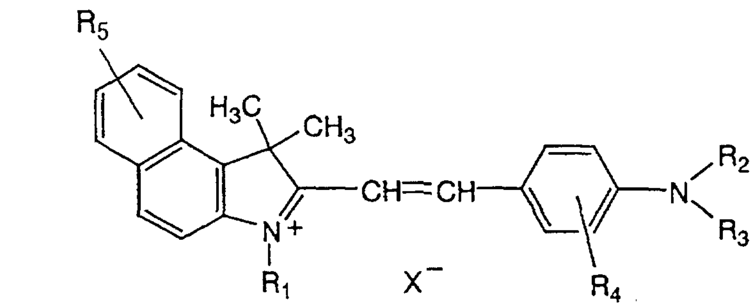

Formula 2:

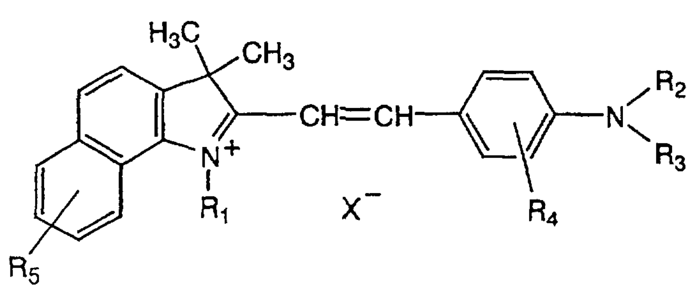

Formula 3:

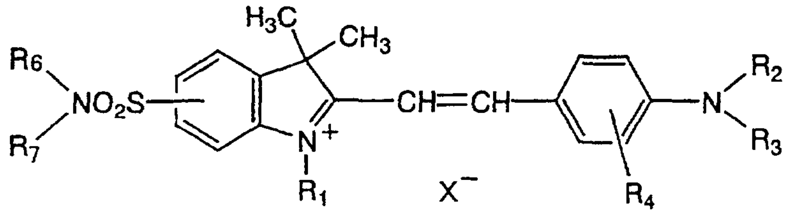

Throughout Formulae 1 to 3, $R_1$ denotes an aliphatic hydrocarbon group. Examples of such are methyl, ethyl, propyl, isopropyl, 1-propenyl, 2-propenyl, isopropenyl, butyl, isobutyl, sec-butyl, tert-butyl, 2-butenyl, 1,3-butadienyl, pentyl, isopentyl, neopentyl, tert-pentyl, and 2-pentenyl groups, which each have up to eight carbon atoms, usually, up to five, and which may have one or more substituents. Examples of such substituents are halogens such as fluoro, chloro, bromo, and iodo; ethers such as methoxy, trifluoromethoxy, ethoxy, propoxy, isopropoxy, butoxy, tert-butoxy, phenoxy, benzyloxy, and naphthoxy groups; aromatic hydrocarbon groups such as phenyl, biphenyl, o-tolyl, m-tolyl, p-tolyl, o-cumenyl, m-cumenyl, p-cumenyl, xylyl, mesityl, and naphthyl groups; heterocyclic groups such as 2-pyridyl, 2-quinolyl, 2-tetrahydropyranyl, 2,2-dimethyl-1,3-dioxolane-4-yl, 1,3-dioxolane-2-yl, 3,5-dimethyl-isoxazole-4-yl, 3-piperidinyl, piperidino, morphorino, 1-piperadinyl, pyrrolidine-1-yl, 1-methyl-2-pyrrolidinyl, 2-benzoimidazolyl, 5-uracil, and benzotriazole-1-yl groups; esters such as methoxycarbonyl, trifluoromethoxycarbonyl, ethoxycarbonyl, phenoxycarbonyl, acetoxy, trifluoroacetoxy, and benzoyloxy groups; and characteristic groups such as carboxy, cyano, nitro, hydroxy, sulfo, sulfonyl, and amide groups which each contain oxygen, sulfur or nitrogen.

Throughout Formulae 1 to 3, $R_2$ and $R_3$ each identically or differently denote an aliphatic hydrocarbon group or an aromatic hydrocarbon group. Examples of the aliphatic hydrocarbon groups are methyl, ethyl, propyl, isopropyl, butyl, isobutyl, sec-butyl, and tert-butyl groups which each have usually carbon atoms of up to four. Preferably examples of the aromatic hydrocarbon groups are usually mono-aliphatic hydrocarbon groups which may have one or more short-length aliphatic hydrocarbon groups such as phenyl, o-tolyl, m-tolyl, p-tolyl, xylyl, mesityl, o-cumenyl, m-cumenyl, and p-cumenyl groups. These aliphatic and aromatic hydrocarbon groups may have one or more of the following substituents: Halogens such as fluoro, chloro, bromo, and iodo; ethers such as methoxy, trifluoromethoxy, ethoxy, propoxy, isopropoxy, butoxy, and tert-butoxy groups; esters such as methoxycarbonyl, trifluoromethoxycarbonyl, ethoxycarbonyl, phenoxycarbonyl, acetoxy, trifluoroacetoxy, and benzoyloxy groups; aromatic hydrocarbon groups such as phenyl, biphenyl, o-tolyl, m-tolyl, p-tolyl, o-cumenyl, m-cumenyl, p-cumenyl, xylyl, and mesityl groups; characteristic groups such as carboxy, cyano, nitro, hydroxy, sulfonyl, sulfo, and amide groups which each contain one or more oxygen, nitrogen or sulfur; or may have only the nitrogen atom bound to $R_2$ and $R_3$ or may form, along with the benzene ring bound to the nitrogen atom, cyclic structures such as pyrrolidine, piperidine, morpholine, julolidine, and tetrahydroquinoline rings.

Throughout Formulae 1 to 3, $R_4$ and $R_5$ are each independently hydrogen atoms or appropriate substituents. Preferable examples of the substituents for $R_4$ and $R_5$ include halogens such as fluoro, chloro, bromo, and iodo; aliphatic hydrocarbon groups such as methyl, ethyl, and propyl groups; ethers such as methoxy, trifluoromethoxy, ethoxy, propoxy, and isopropoxy groups; esters such as methoxycarbonyl, trifluoromethoxycarbonyl, ethoxycarbonyl, propoxycarbonyl, phenoxycarbonyl, acetoxy, trifluoroacetoxy, and benzoyloxy groups; acylamino groups such as acetylamino, propionylamino, and benzoylamino groups; sulfonylamino groups such as methylsulfonylamino, ethylsulfonylamino, propylsulfonylamino, isopropylsulfonylamino, and phenylsulfonylamino groups; sulfonyl groups such as methylsulfonyl, ethylsulfonyl, propylsulfonyl, isopropylsulfonyl, benzenesulfonyl, and toluenesulfonyl groups; alkylaminosulfonyl groups such as methylaminosulfonyl, dimethylaminosulfonyl, ethylaminosulfonyl, diethylaminosulfonyl, propylaminosulfonyl, and isopropylaminosulfonyl groups; and others such as hydroxy, carboxy, sulfo, cyano, and nitro groups. When $R_4$ is a substituent other than hydrogen atom, $R_4$ usually binds to C-2 selectively.

In Formula 3, $R_6$ and/or $R_7$ is an aliphatic or alicyclic hydrocarbon group, and when either is a hydrocarbon group, the other is hydrogen atom. Examples of the hydrocarbon group include those which have up to eight carbon atoms such as methyl, ethyl, propyl, isopropyl, butyl, isobutyl, sec-butyl, tert-butyl, pentyl, isopentyl, neopentyl, tert-pentyl, 1-methylpentyl, 2-methylpentyl, cyclopentyl, hexyl, isohexyl, cyclohexyl, 5-methylhexyl, heptyl, and octyl groups, and particularly, those which have up to four carbon atoms are preferably used. $R_6$ and $R_7$ may bind together via oxy, thio or imino group to form a cyclic structure such as a pyrrolidine, piperidine, or morpholine ring. Depending on the whole structure of styryl dyes, C-5 is usually selected as the binding position of aminosulfonyl group.

Throughout Formulae 1 to 3, $X^-$ represents a counter ion. Varying depending on use, the counter ion can be

appropriately selected with respect to the solubility of styryl dyes in each organic solvent and the stability in the glassy state, and the counter ion usually selected from inorganic acid anions such as fluoric, chloric, bromic, iodic, perchloric, periodic acid, phosphoric acid hexafluoride, antimony hexafluoride, tin acid hexafluoride, phosphoric acid, fluoboric acid, and tetrafluoboric acid ions; organic acid anions such as thiocyanic acid, benzenesulfonic acid, naphthalenesulfonic acid, naphthalenedisulfonic acid, p-toluenesulfonic acid, alkylsulfonic acid, benzenecarboxylic acid, alkylcarboxylic acid, trihaloalkylcarboxylic acid, alkylsulfonic acid, trihaloalkylsulfonic acid, and nicotinic acid ions; and organic metal complex anions such as those of azo, bisphenyldithiol, thiocatecholchelate, thiobisphenolatechelate, and bisdiol-$\alpha$-diketone. In the styryl dyes represented by Formulae 1 to 3, any one of their *cis* and *trans* forms, if they exist, can be included in the present invention.

Concrete examples of the present styryl dyes include those represented by Chemical Formulae 1 to 81, which all have absorption maximum spectra in the visible region and substantially absorb a visible light with a wavelength around 650 nm when in a thin-layer form. Most of the styryl dyes have only decomposition points or decomposition points undistinguishable from their melting points, have relatively-higher decomposition points, and promptly decompose at around their decomposition points. Thus, these styryl dyes can be advantageously used as light absorbents for high-density optical recording media such as DVD-Rs, etc., which use laser beams sensitive to wavelengths around 650 nm as a writing light.

Chemical Formula 1:

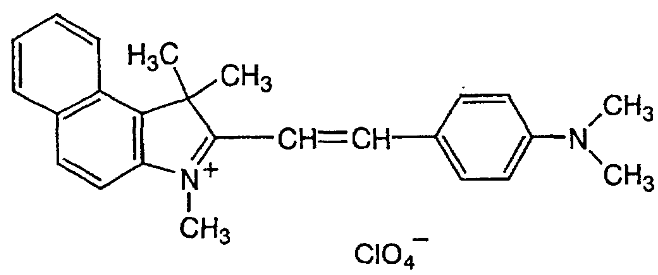

Chemical Formula 2:

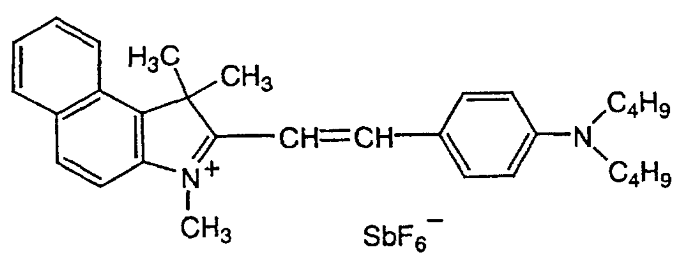

Chemical Formula 3:

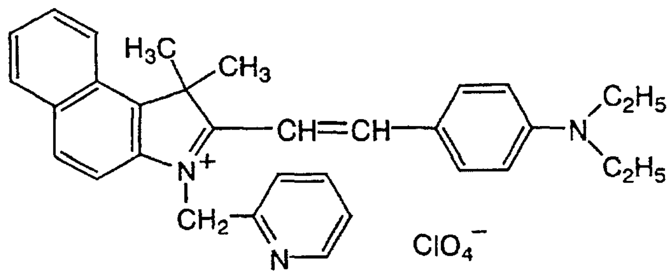

Chemical Formula 4:

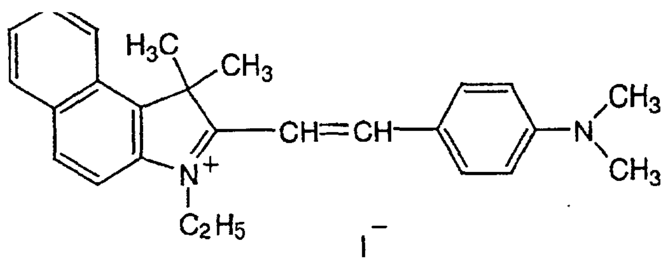

Chemical Formula 5:

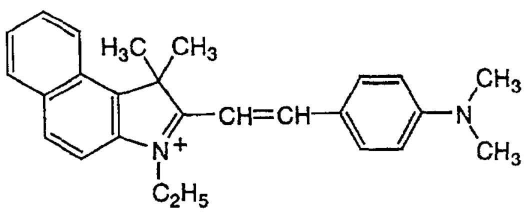

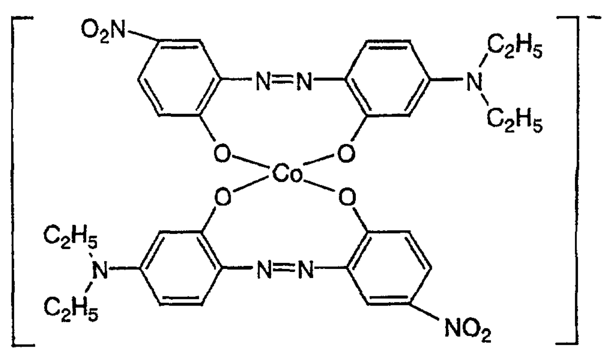

Chemical Formula 6:

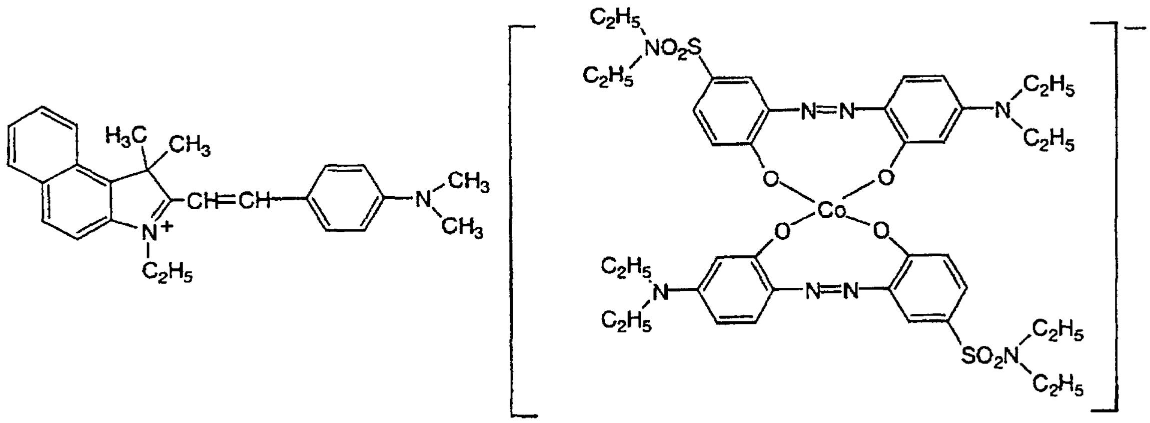

Chemical Formula 7:

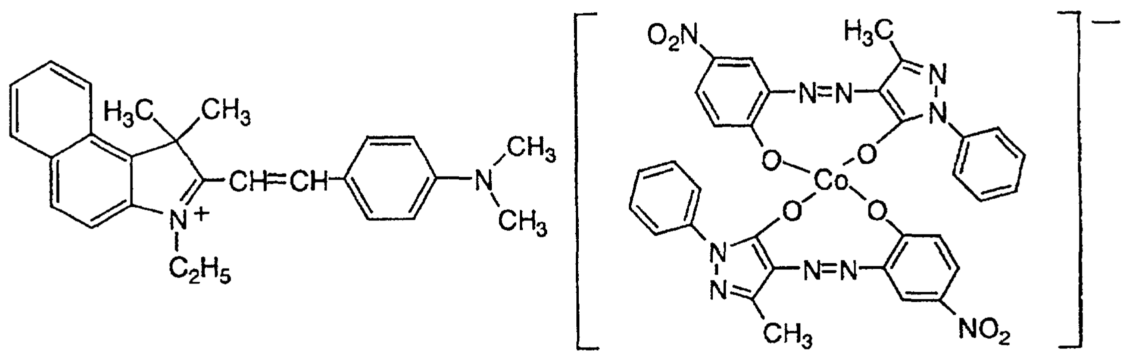

Chemical Formula 8:

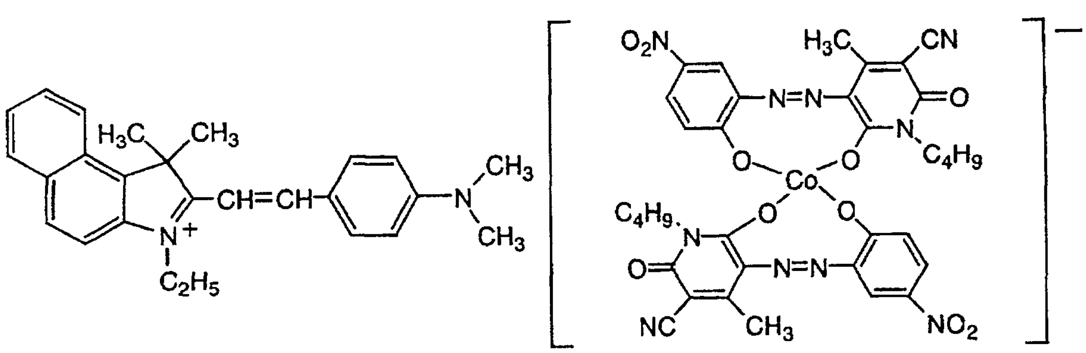

Chemical Formula 9:

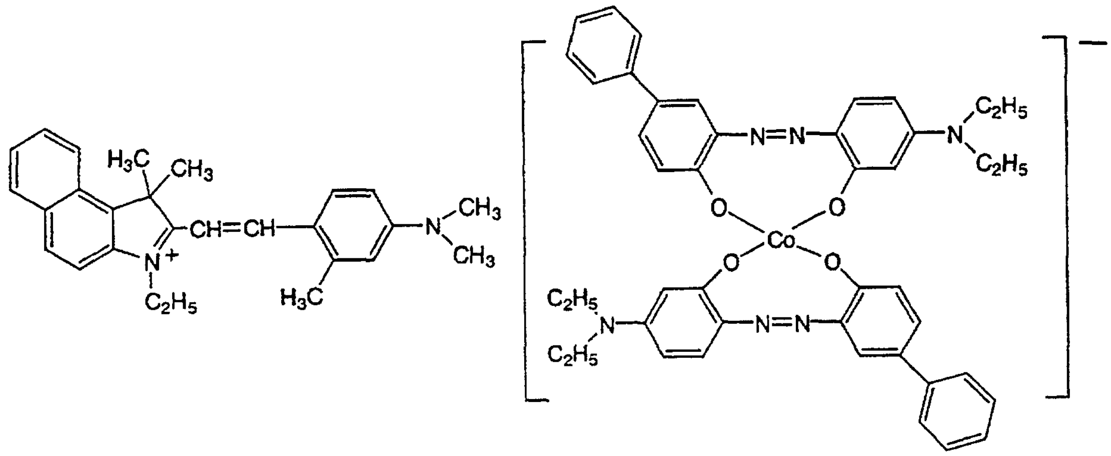

Chemical Formula 10:

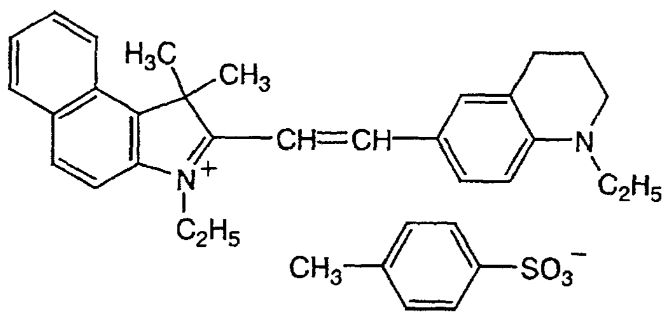

Chemical Formula 11:

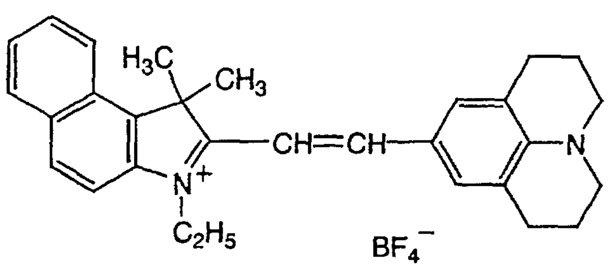

Chemical Formula 12:

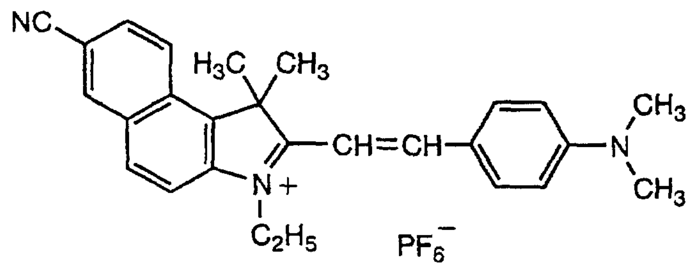

Chemical Formula 13:

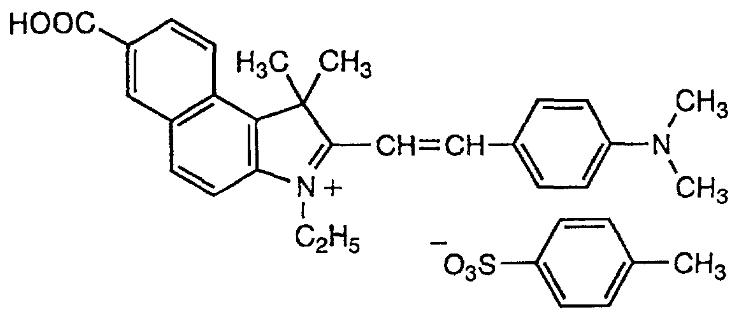

Chemical Formula 14:

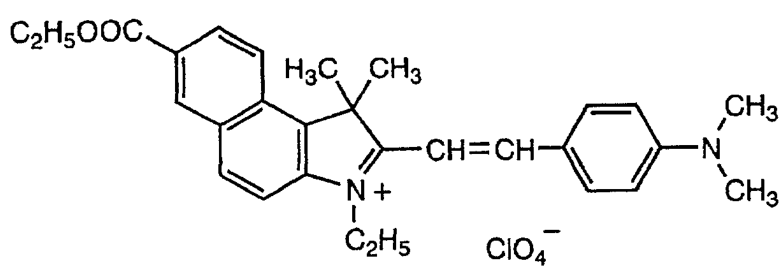

Chemical Formula 15:

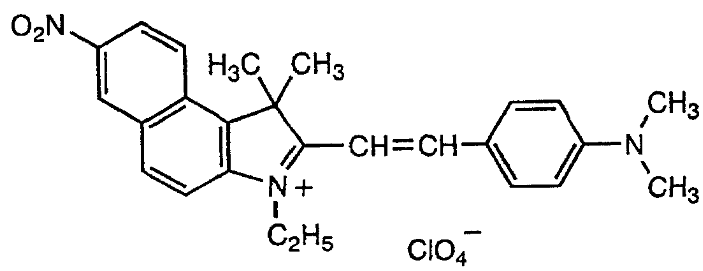

Chemical Formula 16:

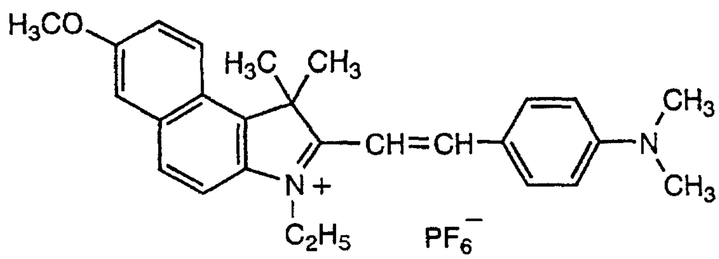

Chemical Formula 17:

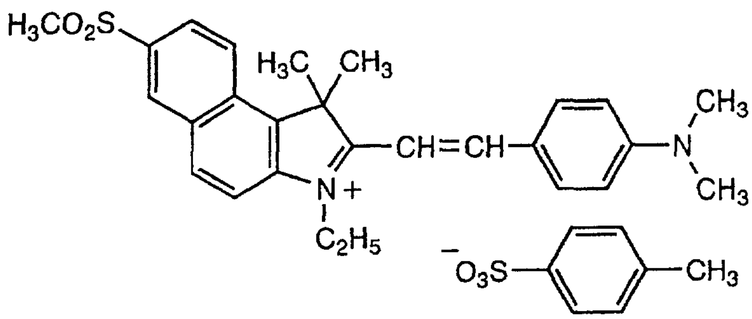

Chemical Formula 18:

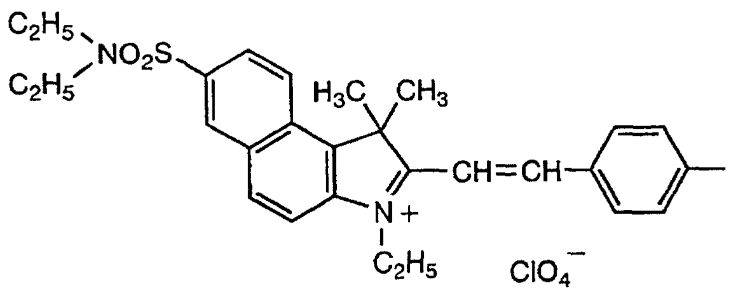

Chemical Formula 19:

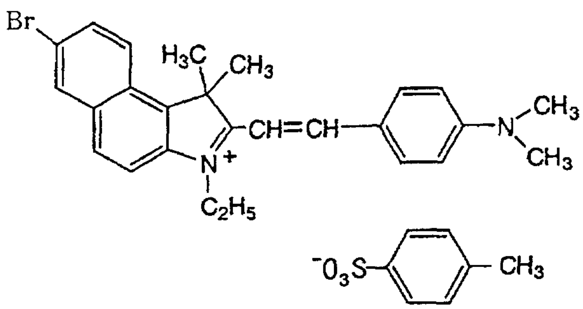

Chemical Formula 20:

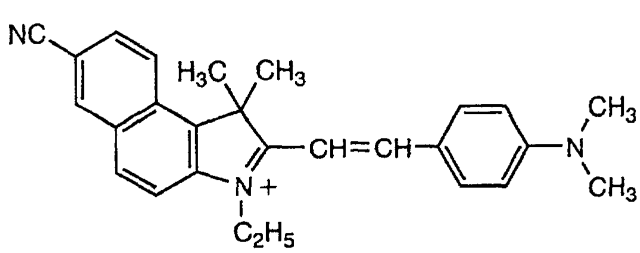

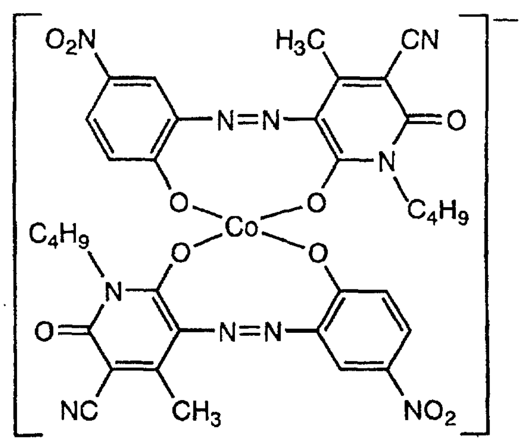

Chemical Formula 21:

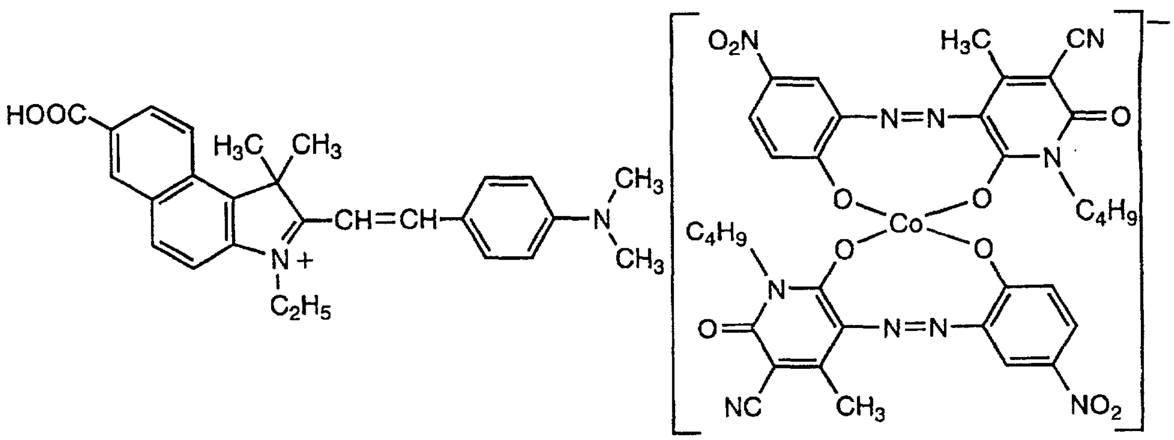

Chemical Formula 22:

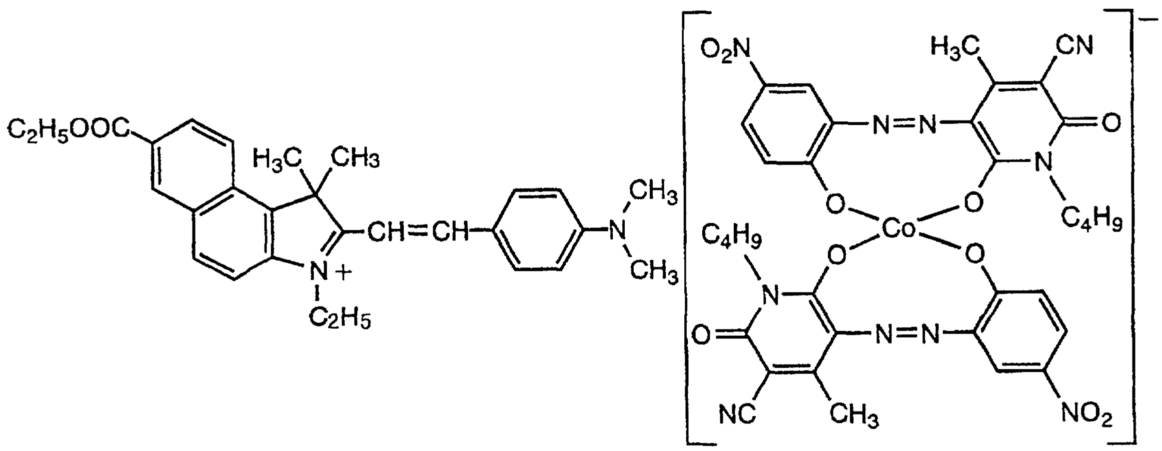

Chemical Formula 23:

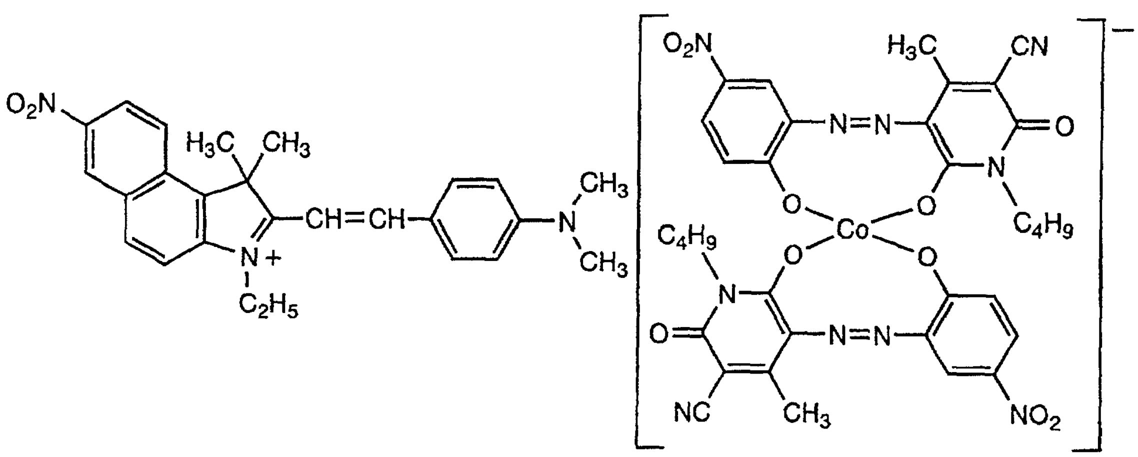

Chemical Formula 24:

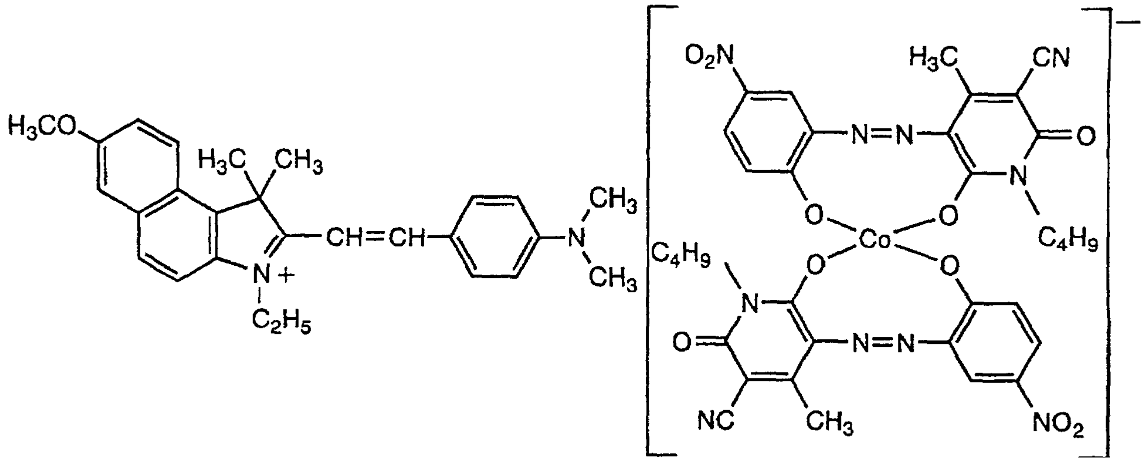

Chemical Formula 25:

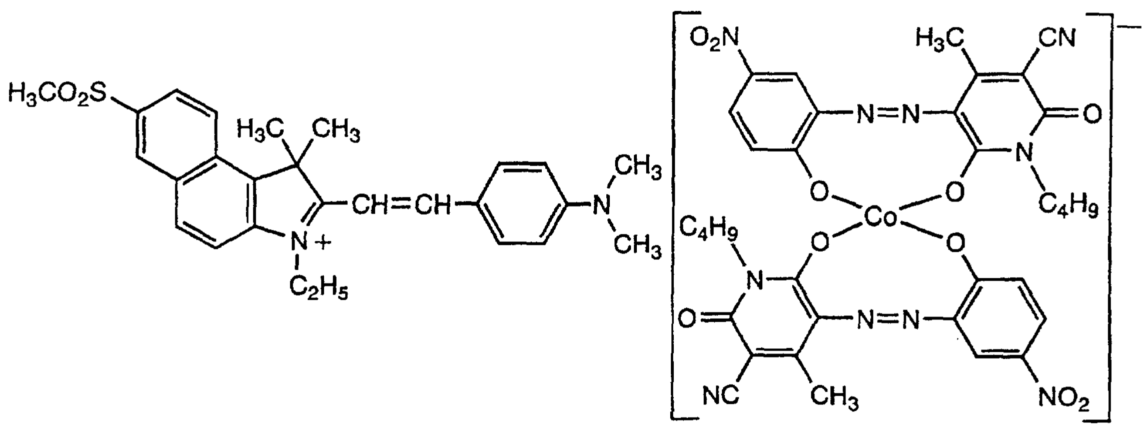

Chemical Formula 26:

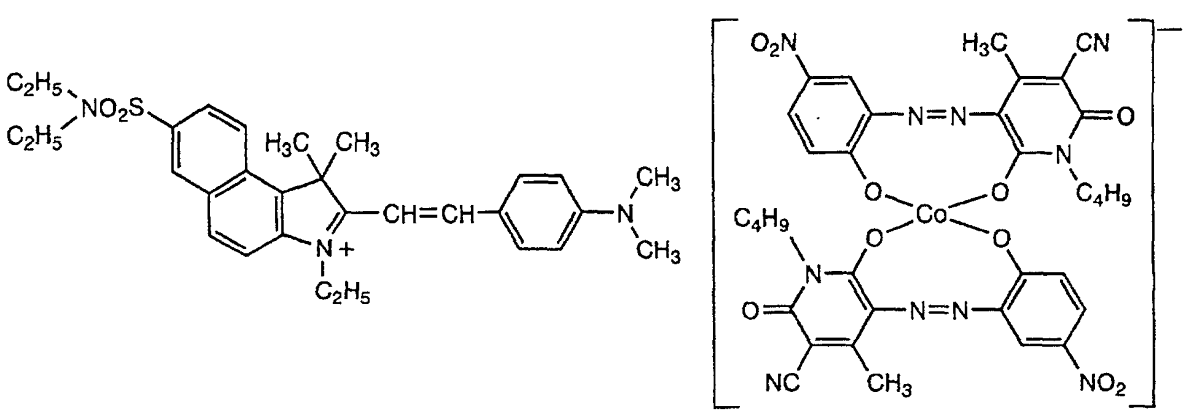

Chemical Formula 27:

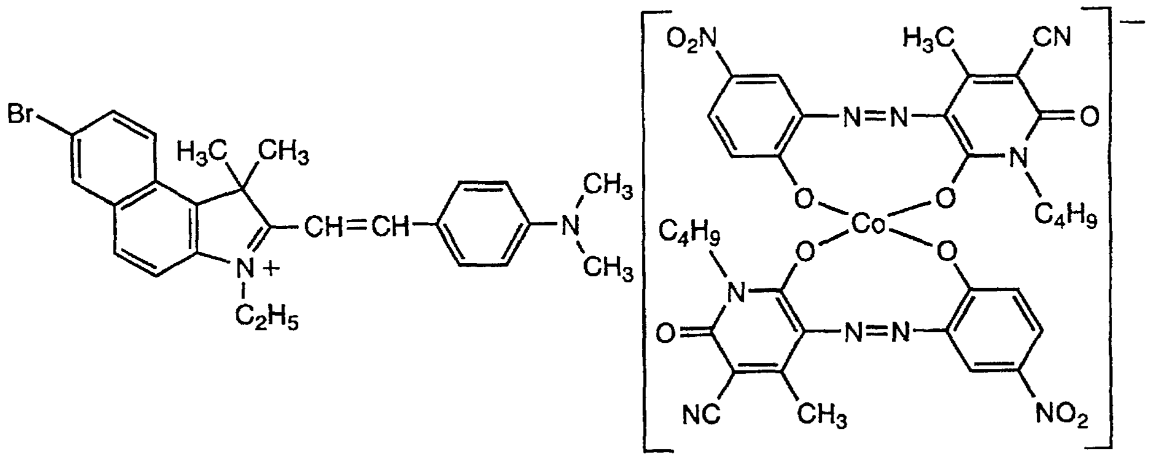

Chemical Formula 28:

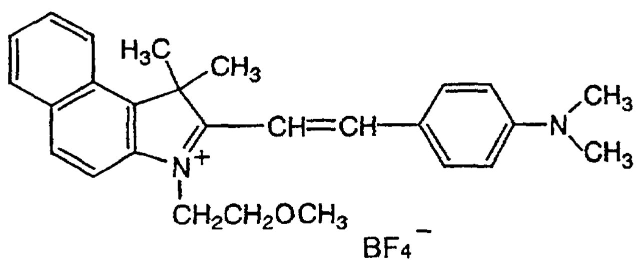

Chemical Formula 29:

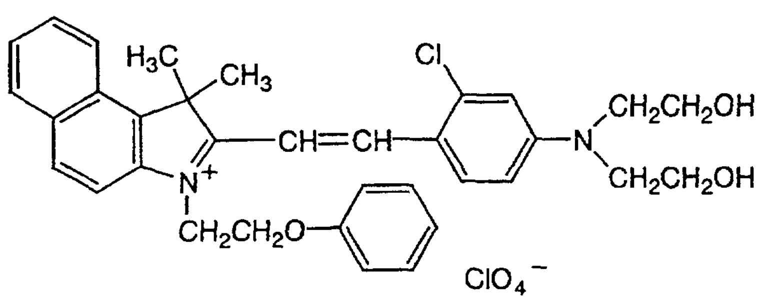

Chemical Formula 30:

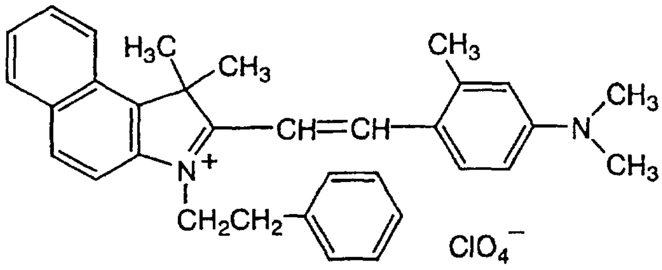

Chemical Formula 31:

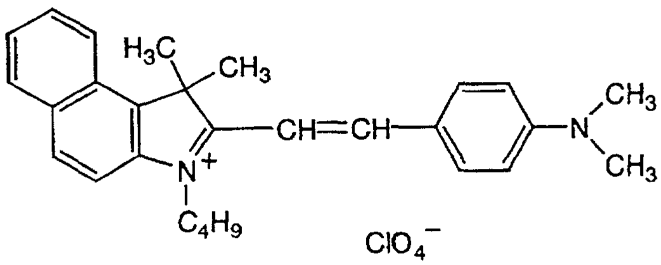

Chemical Formula 32:

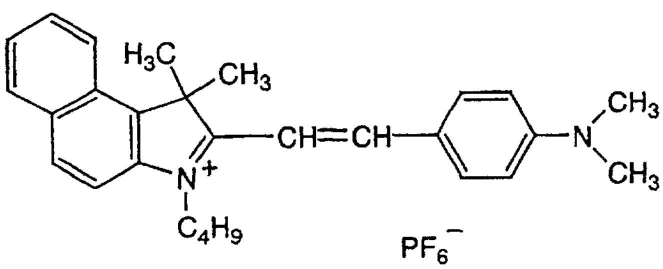

Chemical Formula 33:

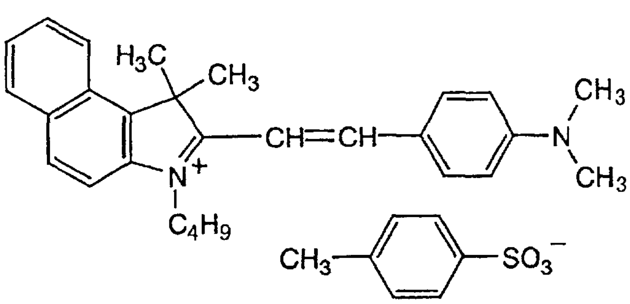

Chemical Formula 34:

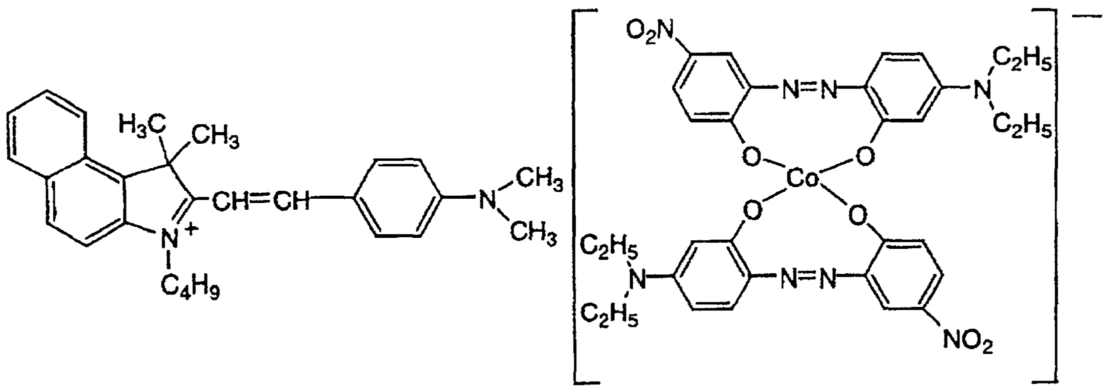

Chemical Formula 35:

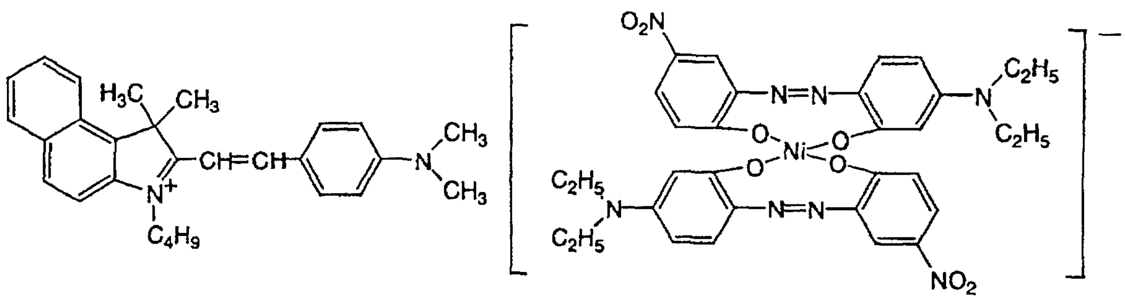

Chemical Formula 36:

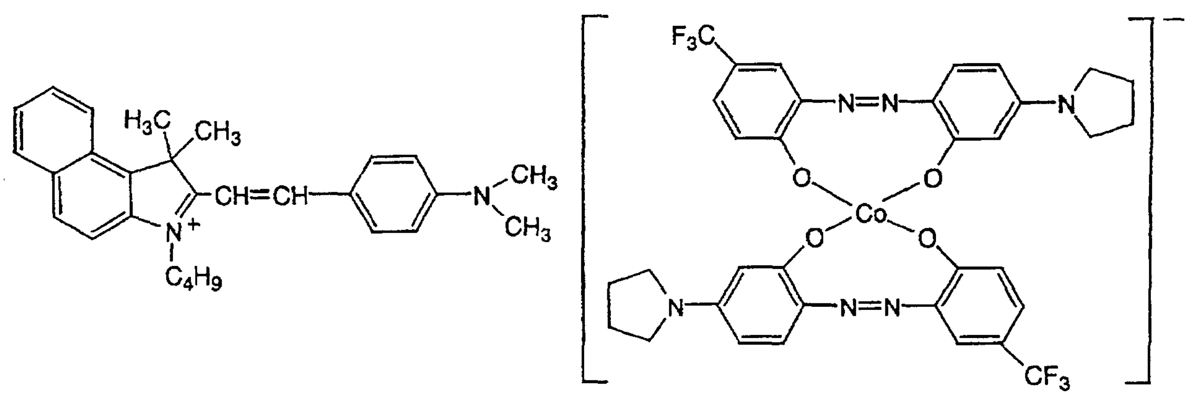

Chemical Formula 37:

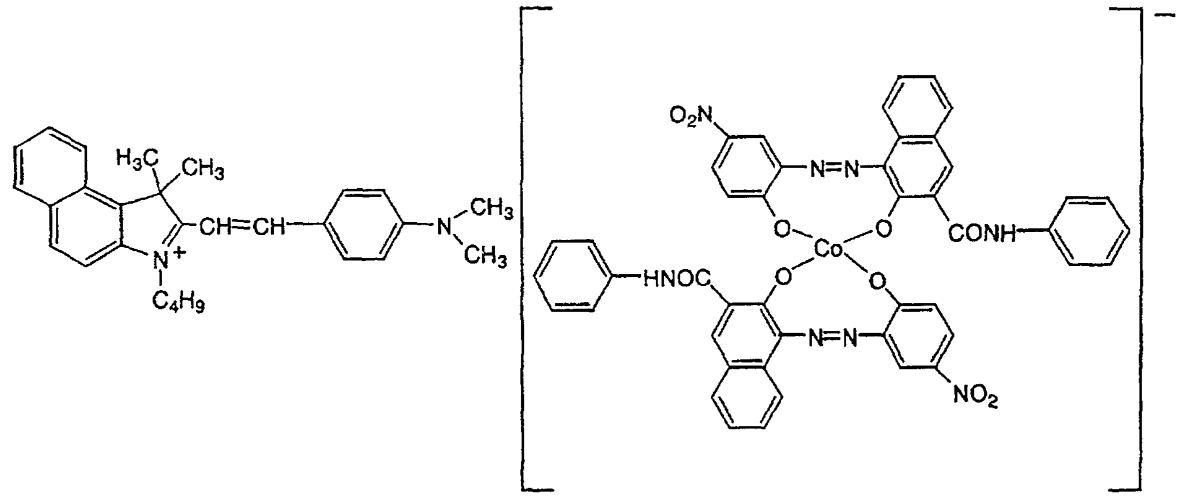

Chemical Formula 38:

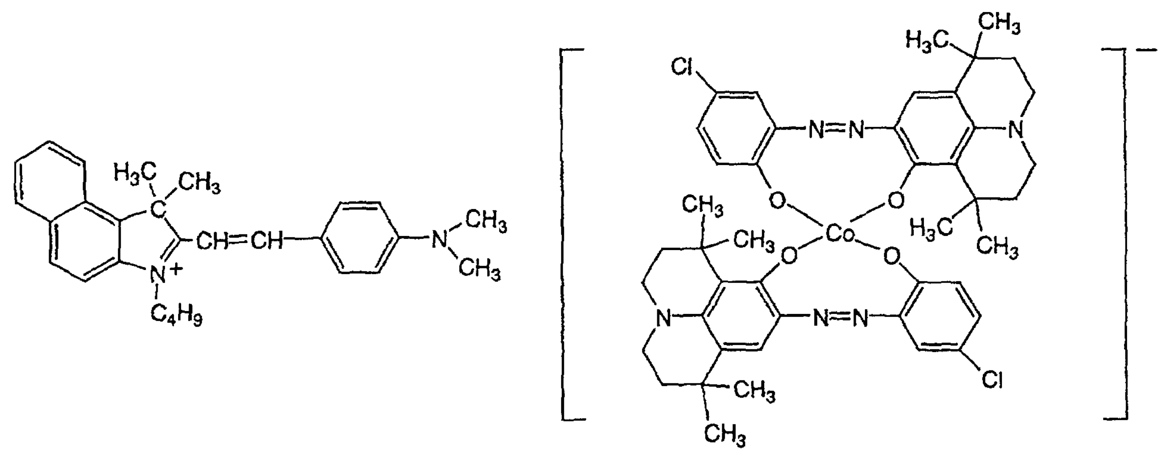

Chemical Formula 39:

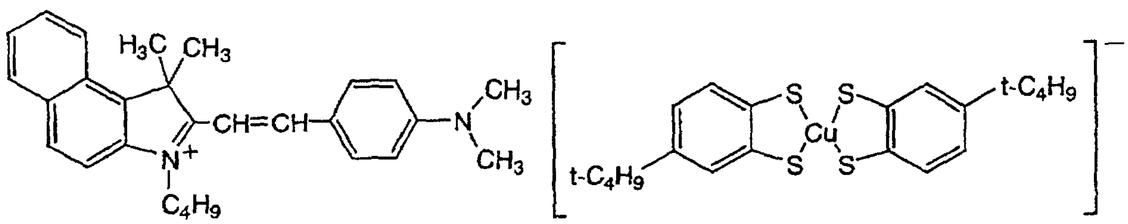

Chemical Formula 40:

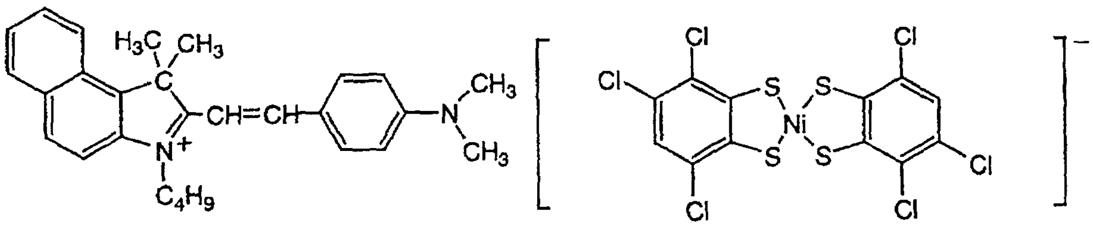

Chemical Formula 41:

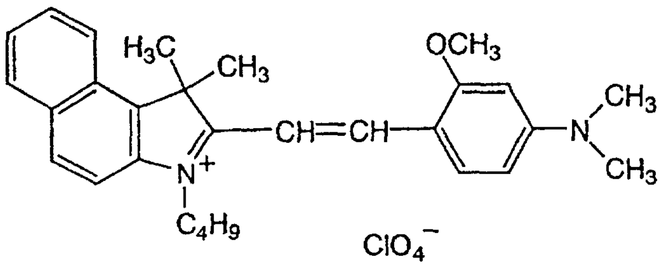

Chemical Formula 42:

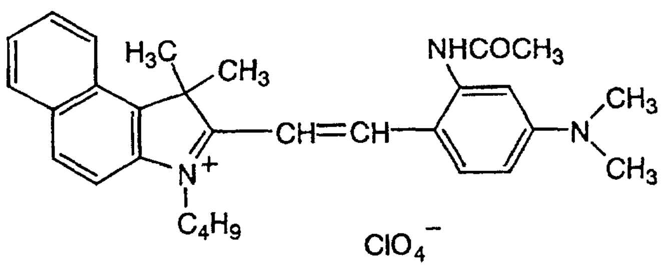

Chemical Formula 43:

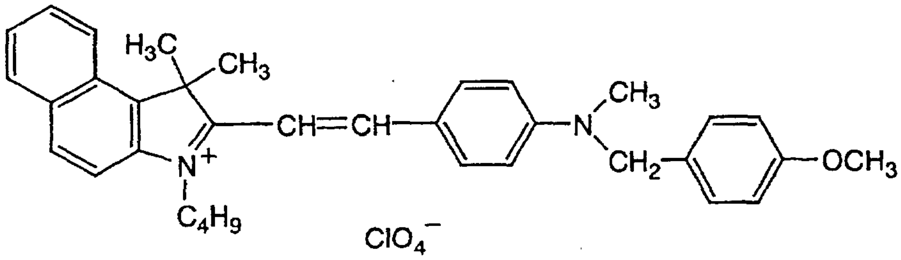

Chemical Formula 44:

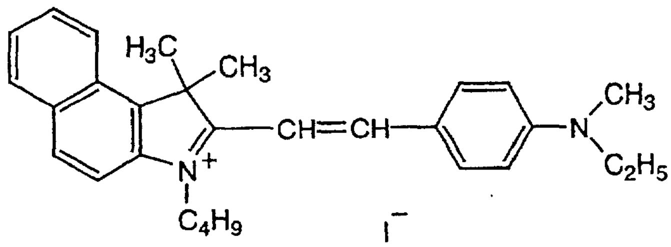

Chemical Formula 45:

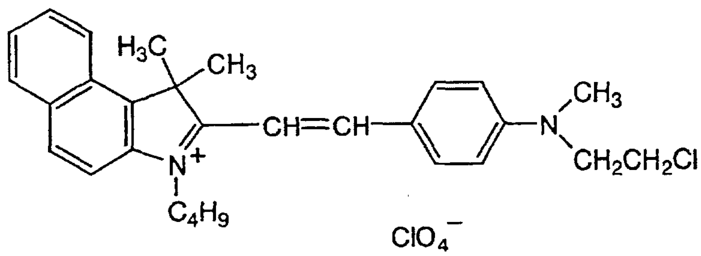

Chemical Formula 46:

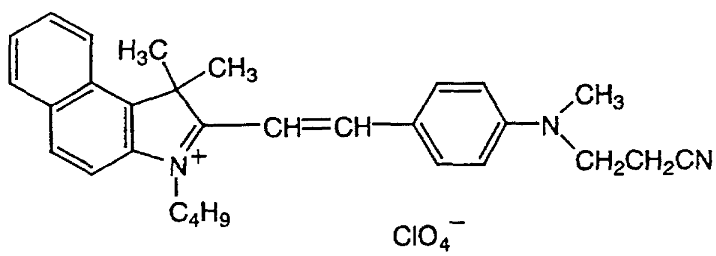

Chemical Formula 47:

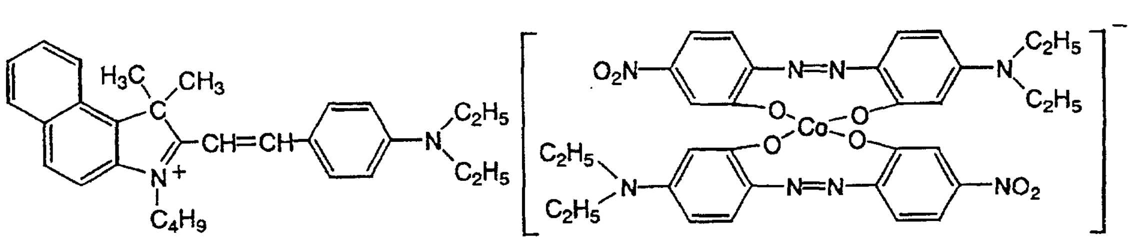

Chemical Formula 48:

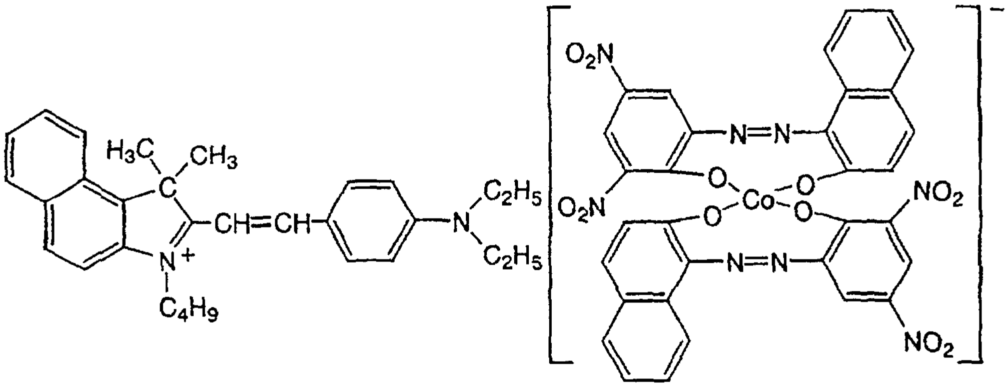

Chemical Formula 49:

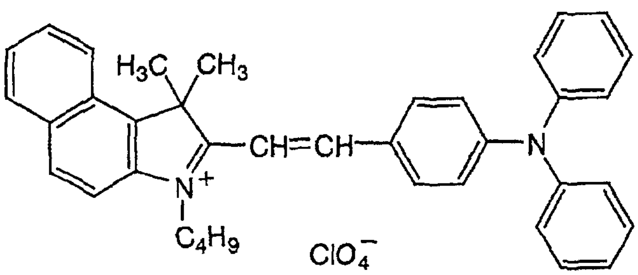

Chemical Formula 50:

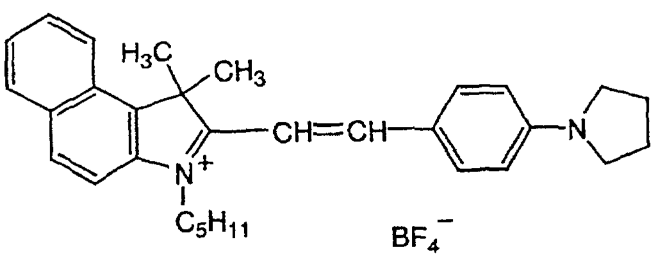

Chemical Formula 51:

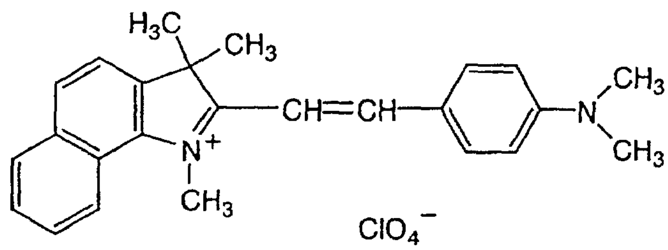

Chemical Formula 52:

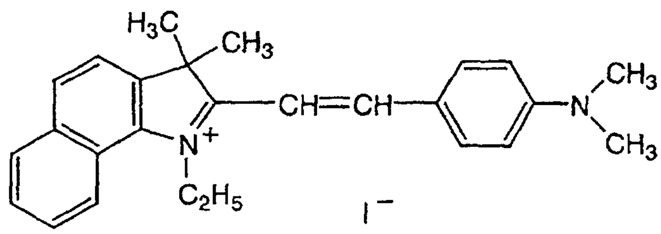

Chemical Formula 53:

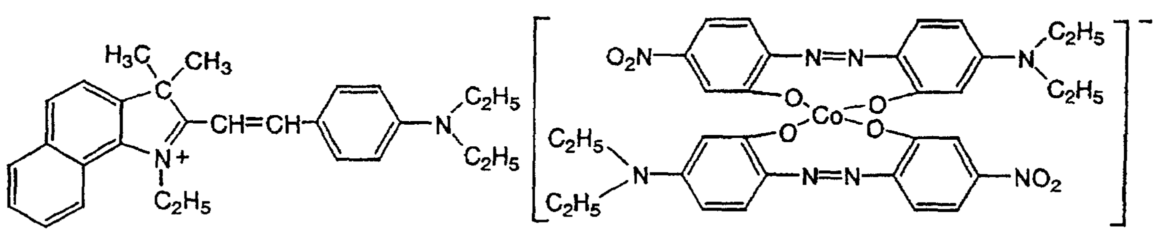

Chemical Formula 54:

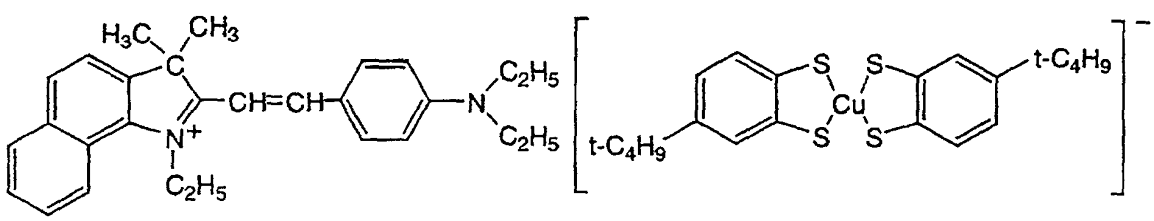

Chemical Formula 55:

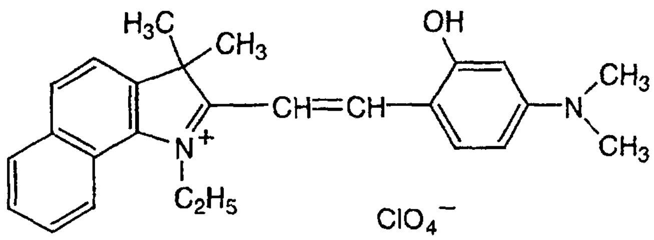

Chemical Formula 56:

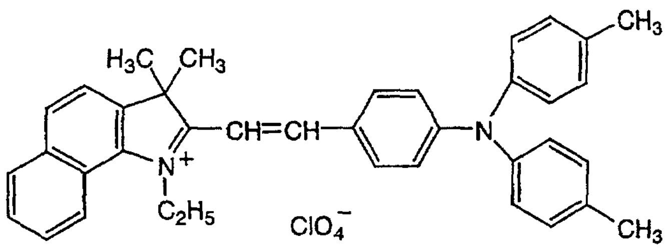

Chemical Formula 57:

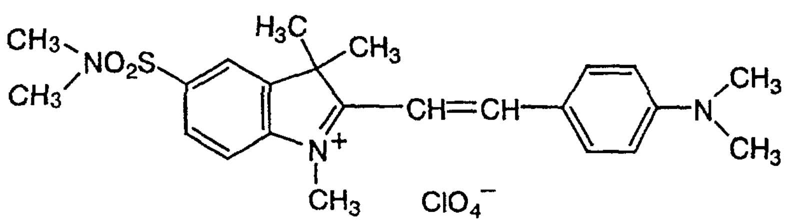

Chemical Formula 58:

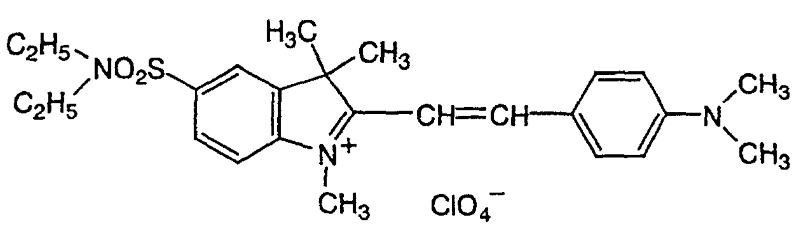

Chemical Formula 59:

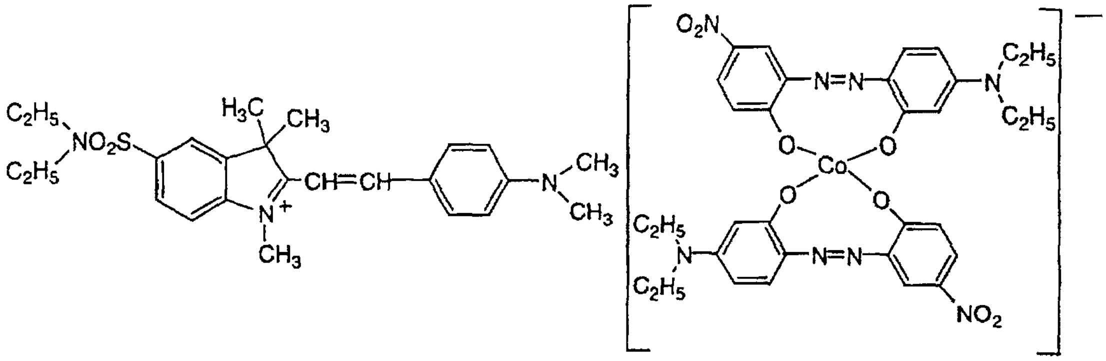

Chemical Formula 60:

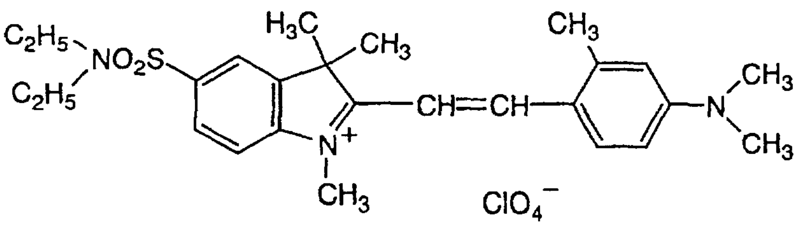

Chemical Formula 61:

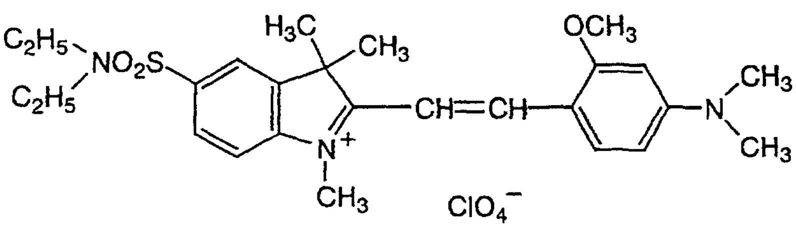

Chemical Formula 62:

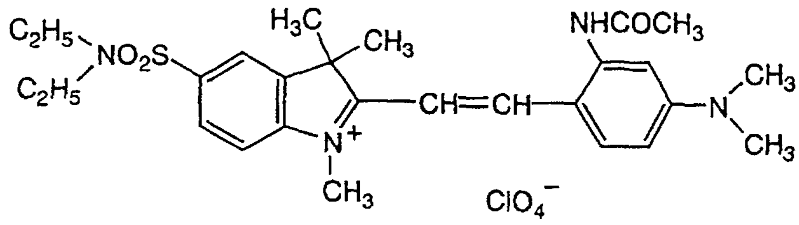

Chemical Formula 63:

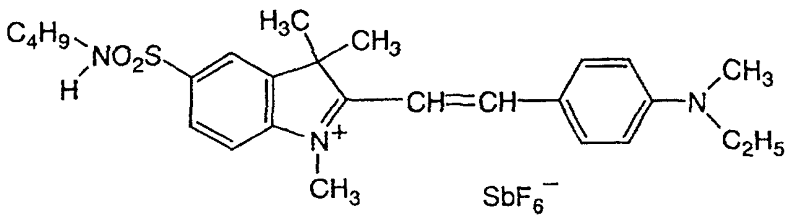

Chemical Formula 64:

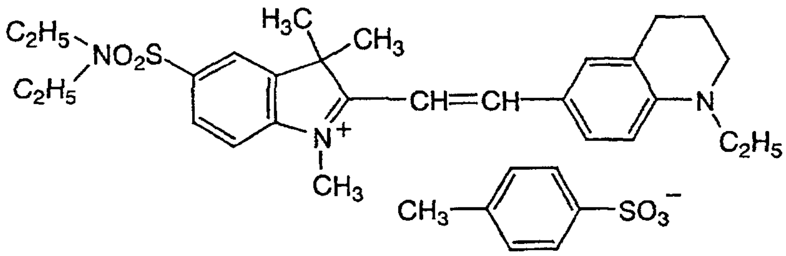

Chemical Formula 65:

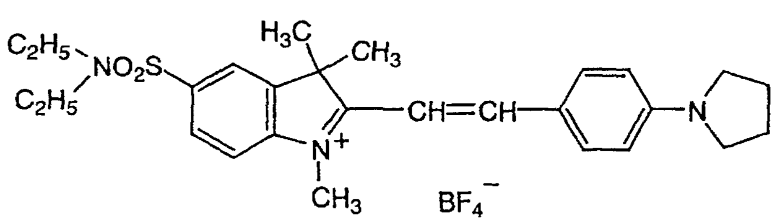

Chemical Formula 66:

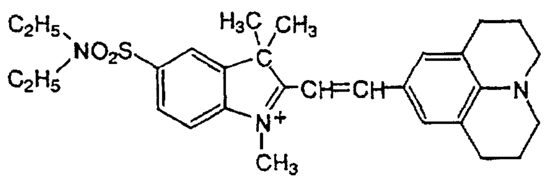
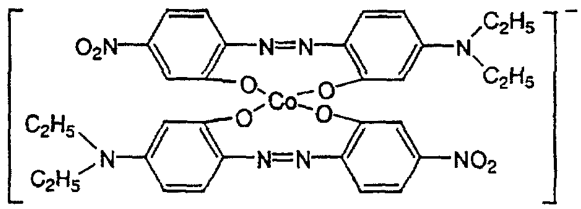

Chemical Formula 67:

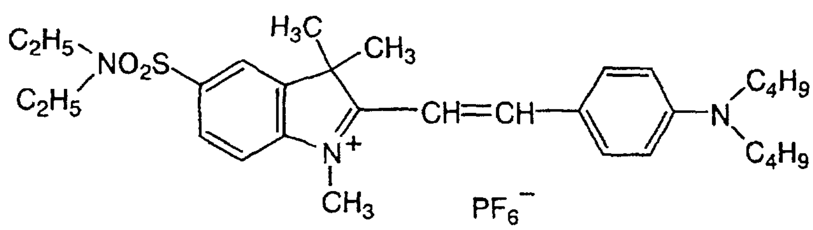

Chemical Formula 68:

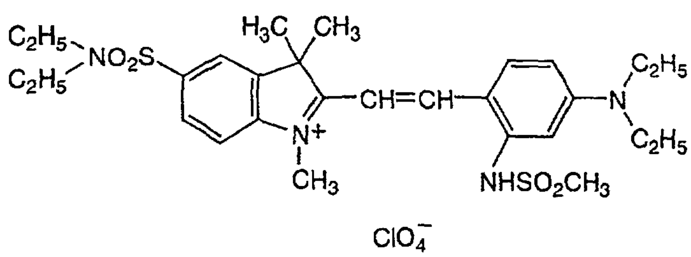

Chemical Formula 69:

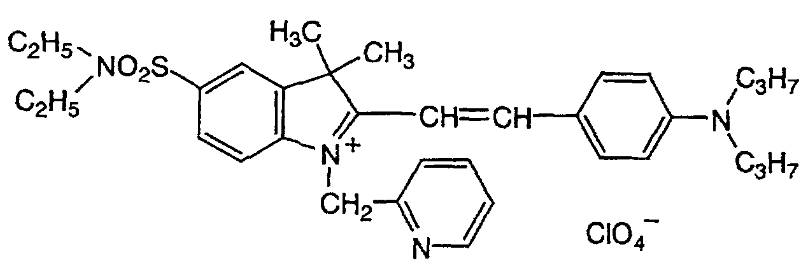

Chemical Formula 70:

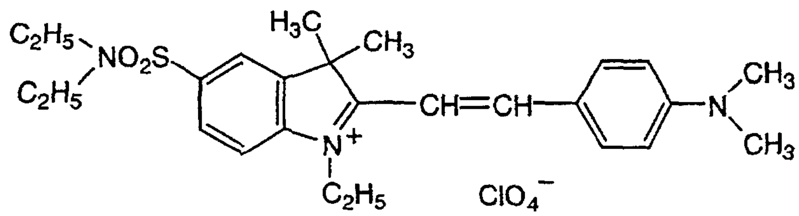

Chemical Formula 71:

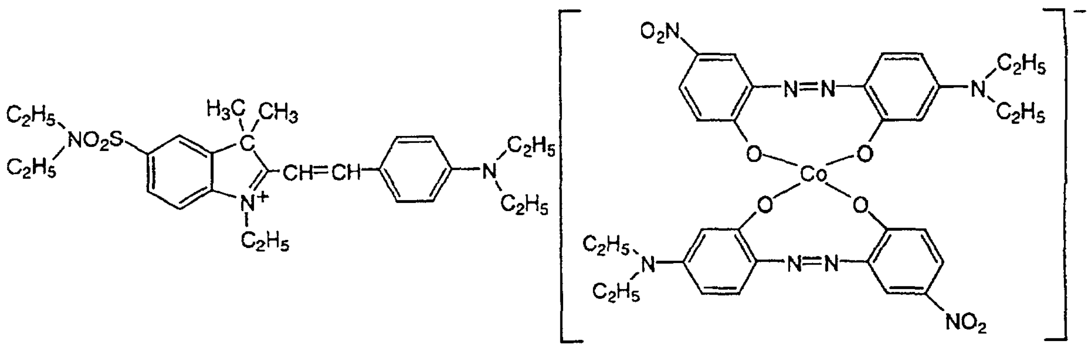

Chemical Formula 72:

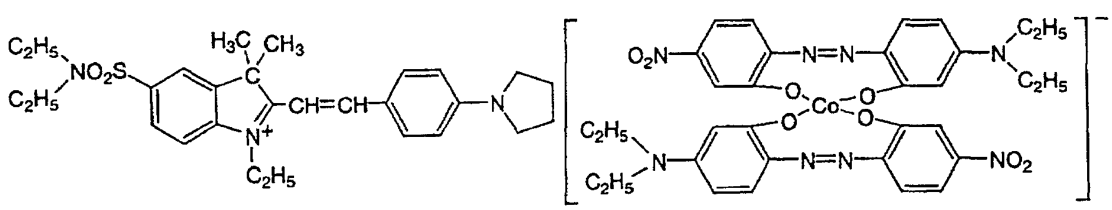

Chemical Formula 73:

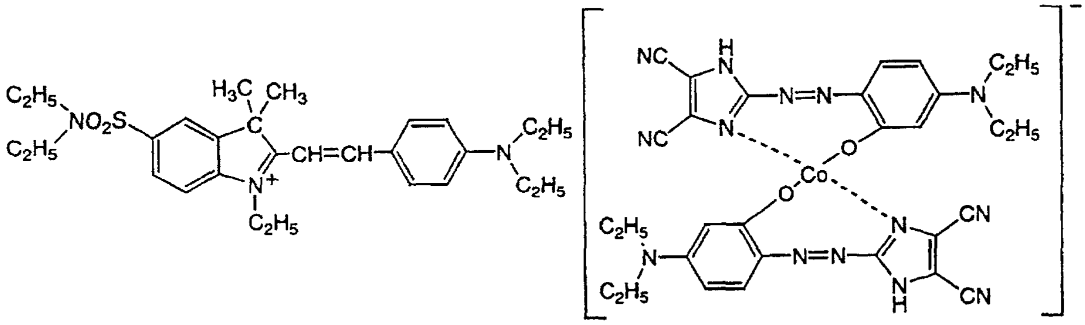

Chemical Formula 74:

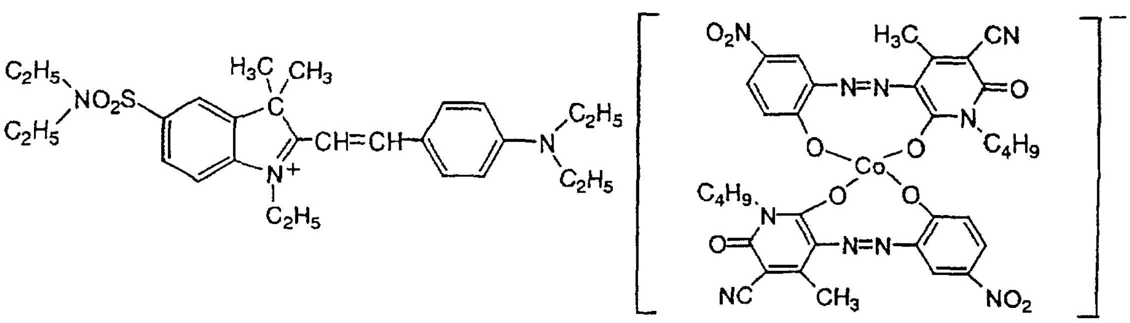

Chemical Formula 75:

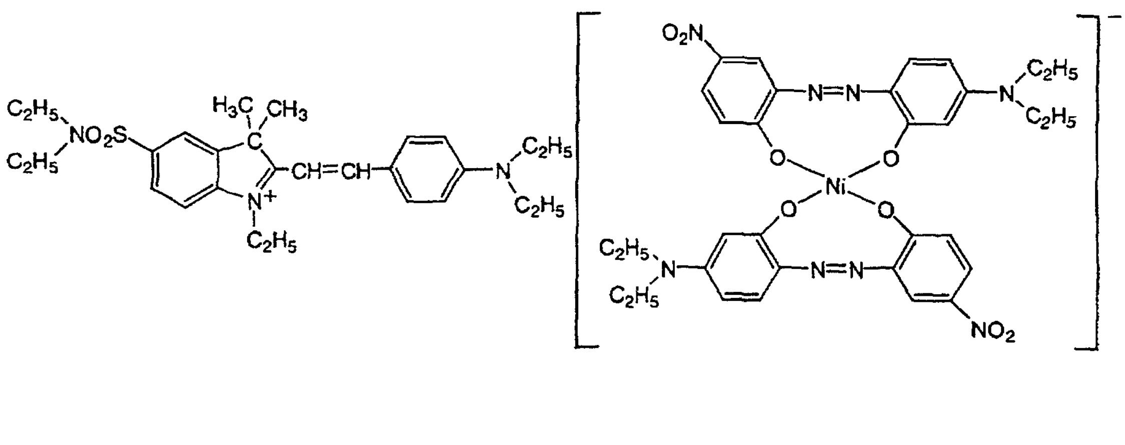

Chemical Formula 76:

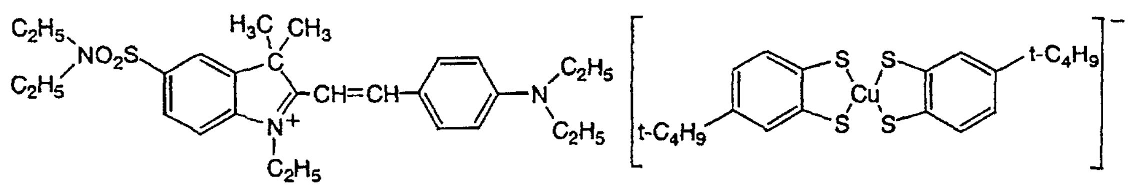

Chemical Formula 77:

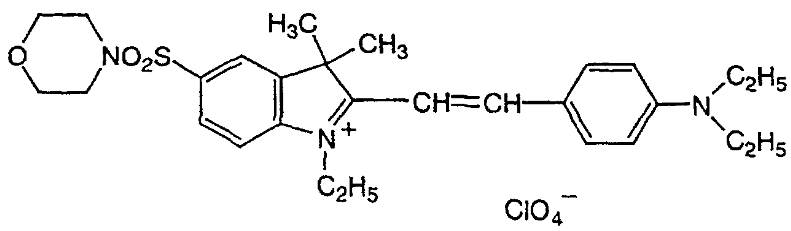

Chemical Formula 78:

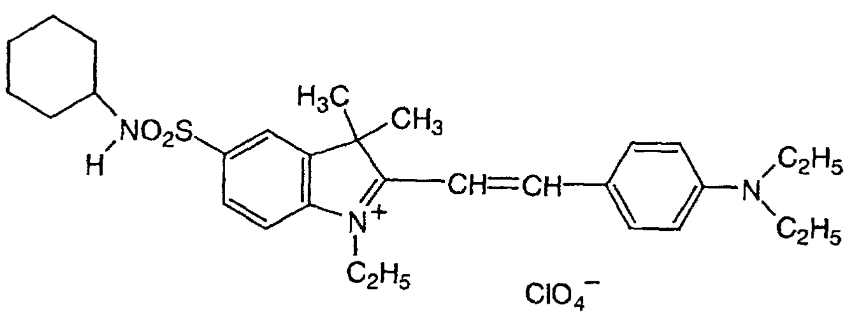

Chemical Formula 79:

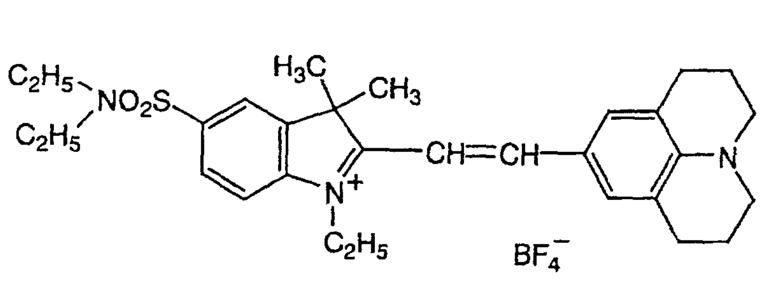

Chemical Formula 80:

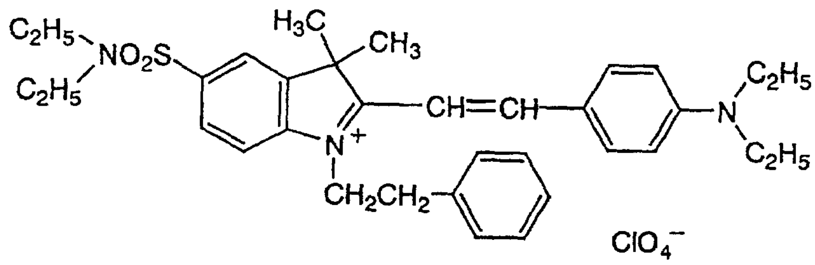

Chemical Formula 81:

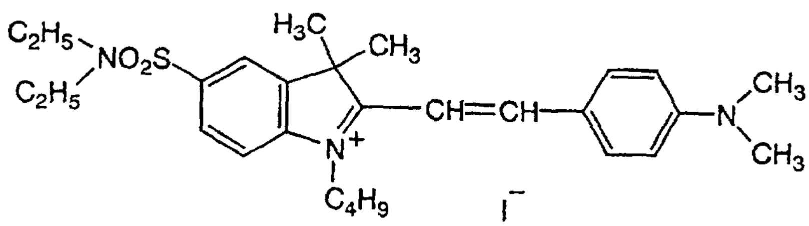

The styryl dyes according to the present invention can be prepared by various methods. With economical view points, they can be preferably prepared through a step of reacting with aromatic amine compounds having an aldehyde group 3,3-dimethylbenzoindolium compounds having an active methyl group or 3,3-dimethylindolium compounds having an aminosulfonyl group. Using the method, the styryl dyes of the present invention can be produced in a desired yield by reacting compounds, represented by Formulae 4 to 6 which have $R_1$ and $R_5$ to $R_7$ corresponding to Formulae 1 to 3, with compounds represented by Formula 7 having $R_2$ to $R_4$ corresponding to Formulae 1 to 3.

Formula 4:

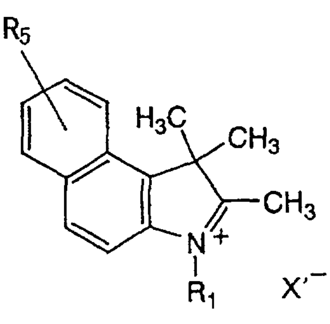

Formula 5:

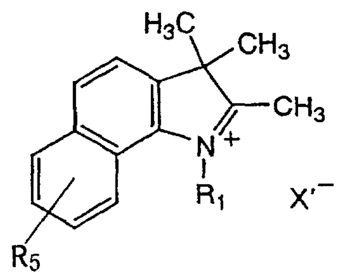

Formula 6:

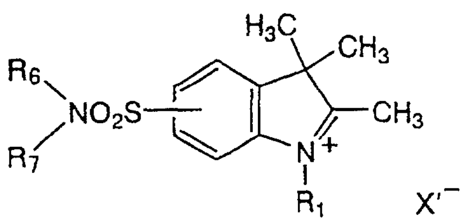

Formula 7:

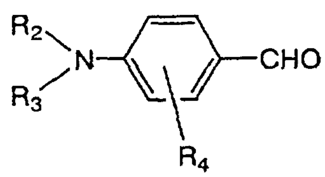

Adequate amounts of or usually about equimolar amounts of the compound represented by either of Formulae 4 to 6 and the compound represented by Formula 7 are provided, and then, if necessary, after dissolved in appropriate solvents, mixed with a basic compound such as sodium hydroxide, potassium hydroxide, sodium carbonate, potassium carbonate, sodium bicarbonate, ammonia, triethylamine, piperidine, pyridine, pyrroline, aniline, N,N-dimethylaniline, N,N-diethylaniline, or N-methylpyrolidone; an acid compound such as hydrochloric acid, sulfuric acid, nitric acid, methane sulfonic acid, p-toluenesulfonic acid, acetic acid, acetic anhydride, propionic anhydride, trifluoroacetic acid, or trifluorosulfonic acid; a Lewis acid compound such as aluminum chloride, zinc chloride, tin tetrachloride, or titanium tetrachloride; and then reacted at a temperature from around or over atmospheric temperature under heating and stirring conditions by heat refluxing.

The solvents used in the present invention are, for example, hydrocarbons such as pentane, hexane, cyclohexane, octane, benzene, toluene, and xylene; halogen compounds such as carbon tetrachloride, chloroform, 1,2-dichloroethane, 1,2-dibromoethane, trichloroethylene, tetrachloroethylene, chlorobenzene, bromobenzene, and α-dichlorobenzene; alcohols and phenols such as methanol, ethanol, 1-propanol, 2-propanol, 1-butanol, 2-butanol, isobutyl alcohol, isopentyl alcohol, cyclohexanol, ethylene glycol, propylene glycol, 2-methoxy ethanol (methyl cellosolve), 2-ethoxy ethanol (ethyl cellosolve), phenol, benzyl alcohol, cresol, diethylene glycol, triethylene glycol, and glycerine; ethers such as diethyl ether, diisopropyl ether, tetrahydrofuran, tetrahydropyran, 1,4-dioxane, anisole, 1,2-dimethoxyethane, diethylene glycol dimethyl ether, dicyclohexyl-18-crown-6, methyl carbitol, and ethyl carbitol; ketones such as furfural, acetone, ethyl methyl ketone, and cyclohexanone; acids and acid derivatives such as acetic acid, acetic anhydride, trichloroacetic acid, trifluoroacetic acid, propionic anhydride, ethyl acetate, ethylene carbonate, propylene carbonate, formamide, N-methylformamide, N,N-dimethylformamide, N-methylacetamide, N,N-dimethylacetamide, hexamethylphosphoric triamide, and trimethyl phosphate; nitrile compounds such as acetonitrile, propionitrile, succinonitrile, and benzonitrile; nitro compounds such as nitromethane and nitrobenzene; sulfur-atom-containing compounds such as dimethylsulfoxide; and water; which all can be used by mixing in an appropriate combination, if necessary.

In general, when solvents are used, the greater the volume of solvents the lower the reaction efficiency, on the contrary, the lower the volume of solvents the more difficult homogeneous heating and stirring of the contents becomes and undesirable side-reaction may easily occur. Thus, the volume of solvents is preferably set to a level up to 100-folds, usually, in the range of 5-50-folds to the total volume of material compounds by weight. Varying depending on the kinds of material compounds and reaction conditions, the reaction should preferably be terminated within 10 hours, usually, 0.5-5 hours. The reaction process can be monitored by conventional methods in general such as thin-layer chromatography, gas chromatography, and high-performance liquid chromatography. After completion of the reaction, the resulting reaction mixture can be used intact or, if necessary, it can be further subjected to conventional counter ion reaction to obtain the styryl dyes having desired counter ions of the present invention. All the styryl dyes represented by Chemical Formulae 1 to 81 can be obtained by the above methods in a desired yield. The compounds represented by Formulae 4 to 6 can be prepared in accordance with the methods as disclosed in Japanese Patent Kokai No. 316,665/98 applied for by the same applicant as the present invention. In Formulae 4 to 6, $X'^-$ is an appropriate counter ion.

The styryl dyes thus obtained may be used intact and, prior to use, they are usually purified by conventional methods in general such as dissolution, extraction, separation, decantation, filtration, concentration, thin-layer chromatography, column chromatography, gas chromatography, high-performance liquid chromatography, distillation, crystallization, and sublimation. If necessary, these methods can be used in combination. For use as light absorbents in high-density optical recording media such as DVD-Rs, the styryl dyes of the present invention should preferably be purified by the methods such as distillation, crystallization and/or sublimation, prior to use.

Explaining the use of the styryl dyes of the present invention, they have absorption maxima in a visible region as mentioned above and substantially absorb laser beams with wavelengths of 630-680 nm, when in a thin-layer form. Unlike conventional related compounds, the styryl dyes of the present invention have decomposition points, i.e., temperatures that the weight of the styryl dyes as test specimens start to decrease on thermogravimetric analysis, which are closely adjacent, i.e., usually within 10 or less, to their melting points, i.e., temperatures at which the styryl dyes as test specimens start to absorb heat; these compounds have only decomposition points or decomposition points undistinguishable from their melting points; have extremely-high decomposition points of about 250°C or higher, preferably, about 260 to about 300°C; and promptly decompose at around their decomposition points. Accordingly, the styryl dyes of the present invention have a variety of uses in many fields including optical recording media, photopolymerization, solar batteries, dyes, etc., which require organic dye compounds having the aforesaid properties, particularly, they are quite advantageously used as light absorbents, which are sensitive to laser beams with wavelengths around 650 nm, in high-density optical recording media such as DVD-Rs, etc., which use such laser beams to write and read information.

In particular, unlike in the case of using conventional related compounds, the use of the styryl dyes of the present invention to write information in high-density optical recording media such as DVD-Rs allows only the styryl dyes positioned at the irradiated points to decompose promptly and form prescribed pits, without deforming the previously-formed pits near to the newly-formed pits by the conduction of heat of fusion and decomposition to the part around the irradiated points, and this highly facilitates the formation of minute pits on a restricted recording surface promptly and at a relatively-high density. Polymethine dyes with a relatively-low melting point and decomposition point have the disadvantage that they may easily deform the part around the previously-formed pits on the recording surface, and a pit-less part by the accumulated heat generated when optical recording media are irradiated by a reading light for a relatively-long period of time, while most of the styryl dyes of the present invention scarcely cause such a problem because of their relatively-high decomposition points. In addition, most of the styryl dyes of the present invention dissolve, without any actual problem, in organic solvents such as TFP used commonly in the field of optical recording media, and this facilitates to increases the product yield and the working efficiency for coating styryl dyes onto the substrates for optical recording media, and maintains the product quality and property at a relatively-high level.

Explaining the use of the styryl dyes of the present invention with reference to their application to organic ablation type optical recording media, the styryl dyes can be used to prepare optical recording media of the present invention in accordance with conventional processes for optical recording media because they do not require any special treatment and handling when used in optical recording media. For example, as light absorbents, one or more of the styryl dyes of the present invention can be incorporated with one or more other organic dye compounds sensitive

to the visible light; or, if necessary, with one or more conventionally used light-resistant improvers, binders, dispersing agents, flame retardants, lubricants, antistatic agents, surfactants, and plasticizers to control the reflectance and the absorptance in recording layers. The resulting mixtures are then dissolved in organic solvents, and the solutions are homogeneously coated over either the surface of substrates by spraying, soaking, roller coating, or rotatory coating method; and dried to form thin layers as recording layers made of light absorbents, and if necessary, followed by forming reflection layers to be closely attached on the recording layers by means of vacuum deposition, chemical vapor deposition, sputtering, or ion-planting method using metals and alloys such as gold, silver, copper, platinum, aluminum, cobalt, tin, nickel, iron, and chromium to attain a reflection efficiency of 45% or higher, and preferably 55% or higher or using commonly used materials for organic reflection layers. Alternatively, to protect the recording layers from scratches, dusts, stains, etc., coatings may be applied over the recording layers ultraviolet ray hardening resins, or thermosetting resins, which contain flame retardants, stabilizers or antistatic agents, and then the coatings are hardened by irradiating light or heating to form protection layers attached closely on the reflection layers. Thereafter, if necessary, a pair of the above substrates with recording layers or reflection- and recording-layers are faced and attached together using, for example, adhesives or viscous sheets; or protection plates, which are made of the same materials and shapes as the substrates, are attached to the protection layers of the substrates.

Other organic dye compounds usable in combination with the styryl dyes of the present invention are not specifically restricted as long as they are sensitive to visible light and capable of controlling the reflectance or the absorptance of recording layers of optical recording media when used with the styryl dyes. Examples of such organic dye compounds are polymethine dyes such as cyanine, merocyanine, oxonol, styryl, azulenium, squallilium, pyrylium, thiopyrylium, and phenanthrene dyes, which have either a monomethine chain that may have one or more substituents or a polymethine chain such as di-, tri-, tetra-, penta-, hexa-, and hepta-methine-chains, wherein the both ends of the monomethine chain or the polymethine chain bind the same or different cyclic cores such as imidazoline, imidazole, benzimidazole, α-naphthoimidazole, β-naphthoimidazole, indole, isoindole, indolenine, isoindolenine, benzindolenine, pyridinoindolenine, oxazoline, oxazole, isoxazole, benzoxazole, pyridineoxazole, α-naphthoxazole, β-naphthoxazole, selenazoline, selenazole, benzoselenazole, α-naphthoselenazole, β-naphthoselenazole, thiazoline, thiazole, isothiazole, benzothiazole, α-naphthothiazole, β-naphthothiazole, tellulazoline, tellulazole, benzotellulazole, α-naphthotellulazole, β-naphthotellulazole, aquaridine, anthracene, isoquinoline, isopyrrole, imidaquinoxaline, indandione, indazole, indoline, oxadiazole, carbazole, xanthene, quinazoline, quinoxaline, quinoline, chroman, cyclohexanedione, cyclopentanedione, cinnoline, thiodiazole, thiooxazolidone, thiophene, thionaphthene, thiobarbituric acid, thiohydantoin, tetrazole, triazine, naphthalene, naphthyridine, piperazine, pyrazine, pyrazole, pyrazoline, pyrazolidine, pyrozolone, pyran, pyridine, pyridazine, pyrimidine, pyrylium, pyrrolidine, pyrroline, pyrrole, phenazine, phenanthridine, phenanthrene, phenanthroline, phthalazine, pteridine, furazan, furan, purine, benzene, benzoxazine, benzopyran, morpholine, and rhodanine rings, which may have one or more substituents. In addition, the following organic dye compounds can be exemplified; acridine, azaannulene, azo metal complex, anthraquinone, indigo, indanthrene, oxazine, xanthene, dioxazine, thiazine, thioindigo, tetrapyraporphyradine, triphenylmethane, triphenothiazine, napthoquinone, phthalocyanine, benzoquinone, benzopyran, benzofuranone, porphyrin, rhodamine dyes, and their related compounds. Depending on use, the above organic dye compounds can be appropriately used in combination. Preferable organic dye compounds used in combination with the styryl dyes of the present invention are those which have absorption maxima in the visible region, particularly, those at a wavelength of 400-850 nm, when in a thin-layer form.

The light-resistant improvers used in the present invention are, for example, nitroso compounds such as nitrosodiphenylamine, nitrosoaniline, nitrosophenol, and nitrosonaphthol; and metal complexes such as 7,7,8,8-tetracyano-p-quinodimethane compounds, diimmonium salts, "NKX-1199" (bis[2'-chloro-3-methoxy-4-(2-methoxyethoxy) dithiobenzyl]ni ckel) produced by Hayashibara Biochemical Laboratories, Inc., Okayama, Japan, formazane metal complexes, and azo metal complexes, which can be appropriately used in combination, if necessary. Preferable light-resistant improvers are those which contain nitroso compounds, formazane metal complexes, or azo metal complexes; examples of such nitroso compounds and formazane metal complexes are those which have a phenylpyridylamine skeleton as disclosed in Japanese Patent Application No. 88, 983/99, titled "Phenylpyridylamine derivatives" applied for by the same applicant as the present invention, and others which contain metal complexes comprising one or more formazane compounds as ligands and metals such as nickel, zinc, cobalt, iron, copper, palladium, etc. When used in combination with the light-resistant improvers, the styryl dyes of the present invention can be effectively inhibited from undesirable changing in deterioration, fading, color change, and quality change, which are inducible by the exposure of reading- and environmental-lights, without lowering the solubility of the styryl dyes in organic solvents and substantially deteriorating the preferable optical characteristics of the dyes. As for the composition ratio, 0.01-10 moles, preferably, 0.05-5 moles of a light-resistant improver(s) can be incorporated into one mole of the present styryl dye(s) while increasing and decreasing the ratio.

The light-resistant improvers should not necessarily exist independently of the styryl dyes of the present invention, and if necessary, they can be formulated into salts, complexes, or compounds by combining the styryl dyes with commonly used organic metal complex anions, which are capable of improving the light resistance, such as those

of azo, bisphenyldithiol, phenylbisdiol, thiocatecholchelate, thiobisphenolatechelate, or bisdithiol-α-diketone by using appropriate spacers and crosslinking agents such as alkoxides or cyarates of metal elements, for example, titanium, zirconium, aluminum, etc., or complexes of these metal elements having carbonyl compounds or hydroxy compounds as ligands. Preferable ones are azo organic-metal-complex-anions, and examples of such are those represented by Formulae 8 to 12.

Formula 8:

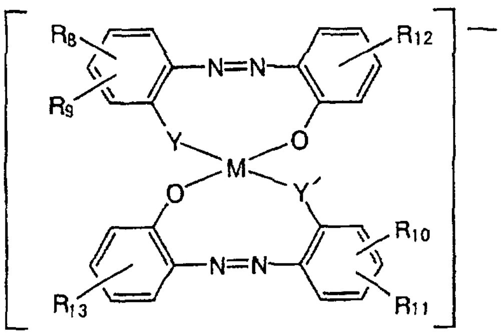

Formula 9:

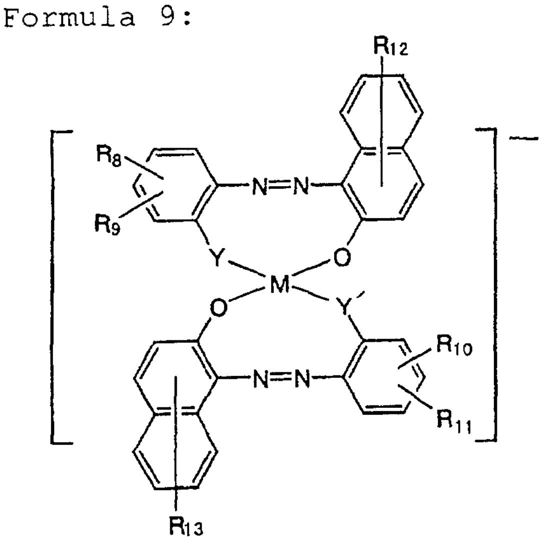

Formula 10:

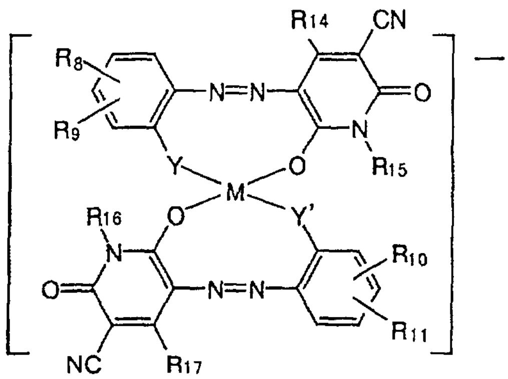

Formula 11:

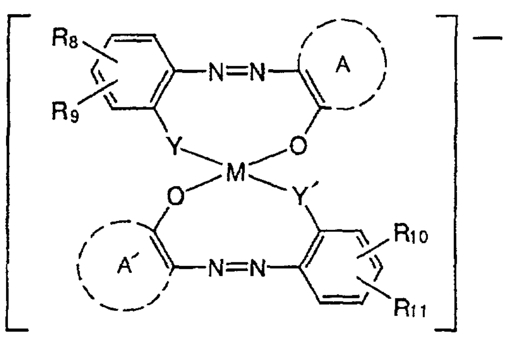

Formula 12:

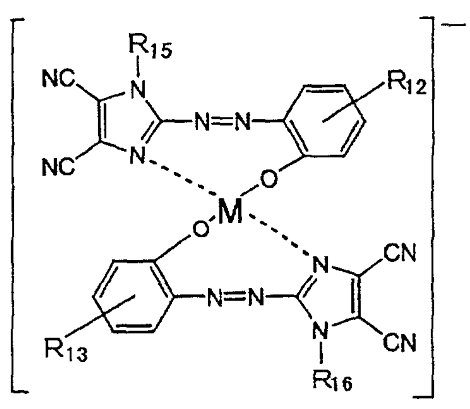

Throughout Formulae 8 to 11, $R_8$ to $R_{11}$ each independently denotes a hydrogen atom; a halogen such as fluorine, chlorine, bromine or iodine; an aliphatic hydrocarbon such as methyl, trifluoromethyl, ethyl, propyl, isopropyl, butyl, isobutyl, sec-butyl, tert-butyl, 1-methylbutyl, 2-methylbutyl, 3-methylbutyl, pentyl, isopentyl, neopentyl, tert-pentyl, hexyl, or isohexyl group; an ether such as methoxy, trifluoromethoxy, ethoxy, propoxy, isopropoxy, butoxy, or tert-butoxy group; an ester such as methoxycarbonyl, trifluoromethoxycarbonyl, ethoxycarbonyl, phenoxycarbonyl, acetoxy, trifluoroacetoxy, benzoyloxy group; or

an alkylaminosulfonyl group such as methylaminosulfonyl, dimethylaminosulfonyl, ethylaminosulfonyl, diethylaminosulfonyl, propylaminosulfonyl, or isopropylaminosulfonyl group; a cyano group; or a nitro group. Y and Y' are, for example, identically or differently hetero atoms selected from the 16 group in the periodic law table such as oxygen, sulfur, selenium, and tellurium. In Formulae 8 to 12, M is a central metal and is generally, for example, one selected from metal elements from the 3-12 groups in the periodic law table such as scandium, yttrium, titanium, zirconium, vanadium, niobium, chromium, molybdenum, manganese, technetium, iron, rubidium, cobalt, rhenium, nickel, palladium, copper, silver, zinc, and cadmium.

Throughout Formula 8 and Formulae 9 to 12, $R_{12}$ and $R_{13}$ each independently denotes a hydrogen atom or, for example, a halogen such as fluorine, chlorine, bromine, or iodine; an aliphatic hydrocarbon group such as methyl, ethyl, propyl, isopropyl, butyl, or tert-butyl group; an ether such as methoxy, trifluoromethoxy, ethoxy, propoxy, isopropoxy, butoxy or tert-butoxy group; an aliphatic, alicyclic or aromatic amino group substituted or unsubstituted, for example, monomethylamino, dimethylamino, monoethylamino, diethylamino, monopropylamino, dipropylamino, monoisopropylamino, diisopropylamino, monobutylamino, dibutylamino, anilino, o-toluidino, m-toluidino, p-toluidino, xylidino, pyridylamino, piperadinyl, piperidino, or pyrrolidino group; hydroxy group, carboxy group, carbamoyl group, sulfo group, or sulfonamide group. One or more of the hydrogen atoms of these substituted amino, carbamoyl, sulfo, and sulfonamide groups may be replaced with halogens such as fluorine, chlorine, bromine, and iodine; aliphatic hydrocarbons such as methyl, ethyl, propyl, and butyl groups; ethers such as methoxy, trifluoromethoxy, ethoxy, and propoxy groups; aromatic hydrocarbon groups such as phenyl, biphenyl, o-tolyl, m-tolyl, p-tolyl, o-cumenyl, m-cumenyl, p-cumenyl, xylyl, and mesityl groups; or other substituents such as carboxy, hydroxy, cyano, and nitro groups.

Throughout Formulae 10 and 12, $R_{14}$ to $R_{17}$ each independently denote hydrogen atom or other groups, for example, aliphatic hydrocarbons such as methyl, ethyl, propyl, isopropyl, butyl, isobutyl, sec-butyl, tert-butyl, 1-methylbutyl, 2-methylbutyl, 3-methylbutyl, pentyl, isopentyl, neopentyl, and tert-pentyl groups. These aliphatic hydrocarbons may contain one or more substituents, and examples of such substituents are halogens such as fluorine, chlorine, bromine, and iodine; ethers such as methoxy, trifluoromethoxy, ethoxy, propoxy, isopropoxy, butoxy, and tert-butoxy groups; aromatic hydrocarbon groups such as phenyl, biphenyl, o-tolyl, m-tolyl, p-tolyl, o-cumenyl, m-cumenyl, p-cumenyl, xylyl, mesityl, and naphthyl groups; and others such as carboxy, hydroxy, cyano, and nitro groups.

In Formula 11, A and A' are the same or different heterocyclic groups with a five to ten membered ring structure, for example, furyl, thienyl, pyrrolyl, pyridyl, piperidinio, piperidil, quinolyl, isoxazolyl, thiazolinyl, and imidazolinyl groups, which contain one or more hetero atoms selected from nitrogen, oxygen, sulfur, selenium, and tellurium atoms. Examples of the heterocyclic groups may contain one or more substituents, for example, aliphatic hydrocarbons such as methyl, trifluoromethyl, ethyl, propyl, isopropyl, butyl, isobutyl, sec-butyl, tert-butyl, 1-methylbutyl, 2-methylbutyl, 3-methylbutyl, pentyl, isopentyl, neopentyl, and tert-pentyl groups; esters such as methoxycarbonyl, trifluoromethoxycarbonyl, ethoxycarbonyl, acetoxy, trifluoroacetoxy, and benzoyloxy groups; aromatic hydrocarbon groups such as phenyl, biphenyl, o-tolyl, m-tolyl, p-tolyl, o-cumenyl, m-cumenyl, p-cumenyl, xylyl, mesityl, and naphthyl groups; and others such as cyano and nitro groups.

Any of the aforesaid organic metal complex anions including azo metal complexes can be prepared by conventional methods or in accordance therewith. The styryl dyes of the present invention, which contain these anions as counter ions, have in themselves light resistance, and do not necessary require the combination use of other light-resistant improvers as essential elements. As a result, they can be freely coated on substrates for optical recording media without considering their solubility with light-resistant improvers when in the form of a liquid or amorphous. Based on the same reason, the styryl dyes can be advantageously used as light absorbents for forming pits on substrates depending on writing light and used as materials for improving light resistance of other light absorbents. Examples of the styryl dyes of the present invention, having organic metal complex ions as counter ions, include those represented by Chemical Formulae 5-9, 34-40, 47, 48, 53, 54, 59, 66 and 71-76.

The styryl dyes of the present invention have satisfactory solubility in organic solvents without substantially causing problems and do not substantially restrict the types of organic solvents used for coating the styryl dyes on substrates. Thus, in the preparation of optical recording media according to the present invention, for example, TFP used frequently to prepare optical recording media and the following organic solvents other than TFP can be selected and appropriately used in combination: For example, hydrocarbons such as hexane, cyclohexane, methylcyclohexane, dimethylcyclohexane, ethylcyclohexane, isopropylcyclohexane, tert-butylcyclohexane, octane, cyclooctane, benzene, toluene, and xylene; halogen compounds such as carbon tetrachloride, chloroform, 1,2-dichloroethane, 1,2-dibromoethane, trichloroethylene, tetrachloroethylene, chlorobenzene, bromobenzene, and $\alpha$-dichlorobenzene; alcohols and phenols such as methanol, ethanol, 2,2,2-trifluoroethanol, 2-methoxyethanol (methyl cellosolve), 2-ethoxyethanol (ethyl cellosolve), 2-isopropoxy-1-ethanol, 1-propanol, 2-propanol, 1-methoxy-2-propanol, 1-ethoxy-2-propanol, 1-butanol, 1-methoxy-2-butanol, 3-methoxy-1-butanol, 4-methoxy-1-butanol, isobutyl alcohol, pentyl alcohol, isopentyl alcohol, cyclohexanol, diethylene glycol, triethylene glycol, propylene glycol, glycerine, diacetone alcohol, phenol, benzyl alcohol, and cresol; ethers such as diethyl ether, diisopropyl ether, tetrahydrofuran, tetrahydropyran, 1,4-dioxane, anisole, 1,2-dimethoxyethane, diethylene glycol dimethyl ether, dicyclohexyl-18-crown-6, methyl carbinol, and ethylcarbitol; ketones such as furfural, acetone, 1,3-diacetyl acetone, ethyl methyl ketone, and cyclohexanone; esthers such as ethyl acetate, butyl acetate, ethylene carbonate, propylene carbonate, and trimethyl phosphate; amides such as formamide, N-methyl formamide, N,N-dimethylformamide, and hexamethylphosphoric triamide; nitriles such as acetonitrile, propionitrile, succinonitrile, and benzonitrile; nitro compounds such as nitromethane, and nitrobenzene; amines such as ethylene diamine, pyridine, piperidine, morpholine, and N-methylpyrrolidone; and sulfur-atom-containing compounds such as dimethylsulfoxide and sulfolane.

Particularly, since the styryl dyes of the present invention have relatively-high solubility in easily-volatile organic solvents such as TFP, methyl cellosolve, ethyl cellosolve, and diacetone alcohol, they are substantially free from dye crystallization when they are sequentially dissolved in the organic solvents, coated on substrates, and dried; and do not cause inconsistent thickness and surface of the formed recording layers. Most of the styryl dyes of the present invention have satisfactory solubility in non-halogen solvents, for example, alcohols such as methyl cellosolve and ethyl cellosolve; and ketones such as diacetone alcohol and cyclohexanone. As an advantage, the above alcohols hardly damage the substrates or spoil the environment when used to dissolve the present styryl dyes for coating onto plastic substrates such as polycarbonate.

Commercialized substrates can be used in the present invention, and usually the substrates used in the present invention can be processed with appropriate materials, for example, into discs, 12 cm in diameter and 0.6 mm or 1.2 mm in thickness, to fulfil the final use by the methods such as compression molding, injection molding, compression-injection molding, photopolymerization method (2P method), thermosetting integral method, and lightsetting integral method. The discs thus obtained can be used singularly or plurally after appropriately attaching them together with adhesives or adhesive sheets, etc. In principal, any materials for the substrates can be used in the present invention as long as they are substantially transparent and have a transmittance of at least 80%, and preferably at least 90% through over the wavelength ranging from 400 nm to 800 nm. Examples of such materials are glasses, ceramics, and others such as plastics including poly(methyl methacrylate), polycarbonate, polystyrene (styrene copolymer), polymethylpenten, polyetherimide, polysulfone, polyethersulfone, polyarylate, polycarbonate/polystyrene alloy, polyestercarbonate, polyphthalatecarbonate, polycarbonateacrylate, non-crystalline polyolefin, methacrylate copolymer, diallylcarbonatediethylene-glycol, and epoxy resin, among which polycarbonate is frequently used. In the case of plastic substrates, concaves for expressing synchronizing-signals and addresses of tracks and sectors are usually transferred to the internal circuit of the tracks during their formation. The form of concaves are not specifically restricted and preferably formed to give 0.3-0.8 μm in average wide and 70-200 nm in width.

Considering the viscosity, the styryl dyes of the present invention are prepared into 0.5-5% (w/w) solutions in the above organic solvents, and then uniformly coated over the substrates to form a dried recording layer of 10-1,000 nm, and preferably 50-500 nm in thickness. Prior to the coating of the solutions, preliminary layers can be formed over the substrates to protect the substrates and improve the adhesion ability of the substrates, if necessary. Materials for the preliminary layers are, for example, high-molecular substances such as ionomer resins, polyamide resins, vinyl resins, natural resins, silicon, and liquid rubbers. In the case of using binders, the following polymers can be used alone or in combination in a weight ratio of 0.01-10 times of the styryl dye(s) : Cellulose esters such as nitrocellulose, cellulose phosphate, cellulose sulfate, cellulose acetate, cellulose propionate, cellulose lactate, cellulose palmitate, and cellulose acetate/propionate; cellulose ethers such as methyl cellulose, ethyl cellulose, propyl cellulose, and butyl cellulose; vinyl resins such as polystyrene, poly(vinyl chloride), poly(vinyl acetate), poly(vinyl acetal), poly(vinyl butyral), poly(vinyl formal), poly(vinyl alcohol), and poly(vinyl pyrrolidone); copolymer resins such as styrene-butadiene copolymers, styrene-acrylonitrile copolymers, styrene-butadiene-acrylonitrile copolymers, vinyl chloride-vinyl acetate copolymers, and maleic anhydride copolymers; acrylic resins such as poly(methyl methacrylate), poly(methyl acrylate), polyacrylate, polymethacrylate, polyacrylamide, and polyacrylonitrile; polyesters such as poly(ethylene terephthalate); and polyolefins such as polyethylene, chlorinated polyethylene, and polypropylene.

Explaining the method for using the optical recording media according to the present invention, the high-density optical recording media such as DVD-Rs according to the present invention can write information at a relatively-high density by using a laser beam with a wavelength around 650 nm, and particularly 630-680 nm irradiated by semiconductor lasers such as those of GaN, AlGaInP, GaAsP, GaAlAs, InGaP, InGaAsP and InGaAlP; or YAG lasers combined with second harmonic generation inducing element (SHG element) . To read information, laser beams with wavelengths identical to or slightly longer than those used for writing information. As for the laser power for writing and reading information, in the optical recording media of the present invention, it is preferably set to a relatively-high level which exceeds the threshold of the energy required for forming pits when used for writing information, while it is preferably set to a relatively-low level, i.e., a level below the threshold, when used for reading recorded information, although the power levels vary depending on the types and ratios of other organic dye compounds and light-resistant improvers which are used in combination with the styryl dyes: Generally, the power levels can be controlled to powers of at least

4 mW, and usually not higher than 50 mW for writing; and to powers of 0.1-4 mW for reading. The recorded information is read by detecting the changes of both the reflection light level and the transmission light level in the pits and the pitless part on the recorded surface of optical recording media.

Accordingly, in the optical recording media according to the present invention, minute pits with a pit width of below 0.834 μm/pit, usually 0.4 μm/pit, and a track pitch of below 1.6 μm, usually 0.74 μm, commonly used in the standard CD-R, can be formed smoothly at a relatively-high density using a light pickup by a laser beam with a wavelength around 650 nm, particularly, 630-680 nm. For example, in the case of using a substrate, 12 cm in diameter, it can realize an extremely-high density optical recording medium having a recording capacity of far exceeding 0.682 GB per one side, usually, 4.7 GB per one side, i.e., a recording capacity of about two hours of information of moving images, which capacity could not be easily attained by conventional cyanine dyes.

Since the optical recording media of the present invention can record information of characters, images, voices, and other digital data at a relatively-high density, they are advantageously useful as recording media for professional and family use to record/backup/keep documents, data, and computer software. Particular examples of the kinds of industries and the forms of information, to which the optical recording media of the present invention can be applied, are as follows: Drawings of construction and engineering works, maps, ledgers of loads and rivers, aperture cards, architectural sketches, documents of disaster protection, wiring diagrams, arrangement plans, information of newspapers and magazines, local information, blueprints of productions for construction specifications, etc., which all relate to construction and engineering works; blueprints, ingredient tables, prescriptions, product specifications, product price tables, parts lists, maintenance information, case study files of accidents and problems, manuals for claims, production schemes, technical documents, sketches, details, company's house-made product files, technical reports, analysis reports, etc., which all relate to manufacturing; customer information, correspondents information, company information, contracts, information from newspapers and magazines, business reports, reports of a company's credibility, records of stocks, etc., which all relate to sales; a company's information, records of stocks, statistical documents, information from newspapers and magazines, contracts, customer lists, documents of application/notification/licenses/authorization, business reports, etc., which all relate to finance; information regarding properties, sketches of construction, maps, local information, etc., which all relate to real property and transportations; diagrams of writings and piping arrangements, documents of disaster protection, tables of operation manuals, documents of investigations, technical reports, etc., which all relate to electric and gas supplies; charts, files of clinical histories and case studies, diagrams of medical care/institution relationships, etc., which all relate to medical fields; texts, collections of questions, educational documents, statistical information, etc., which all relate to private and preparatory schools; scientific papers, records in academic societies, monthly reports of research, research data, documentary records and indexes thereof, etc., which all relate to universities, colleges, and research institutes; inspection data, literatures, patent publications, weather maps, analytical records of data, customer files, etc., which all relate to information; case studies on laws; membership lists, history notes, records of works/products, competition data, data of meetings/congresses, etc., which all relate to organizations/associations; sightseeing information, traffic information, etc., which all relate to sightseeing; indexes of homemade publications, information from newspapers and magazines, who's who files, sport records, telop files, scripts for broadcastings, etc., which all relate to mass communications and publishing; and maps, ledgers of roads and rivers, fingerprint files, resident cards, documents of application/notification/license/authorization, statistical documents, public documents, etc., which all relate to government offices. Particularly, the write-once type optical recording media of the present invention can be advantageously useful for storing records of charts and official documents which must not be deleted or rewritten intentionally, and used as electronic libraries for art galleries, libraries, museums, broadcasting stations, etc.

As a rather specific use, the optical recording media of the present invention can be used to edit and prepare compact discs, digital video discs, laser discs, MDs (a mini disc as information recording system using photomagnetic disc), CDVs (a laser disc using compact disc), DATs (an information recording system using magnetic tape), CD-ROMs (a read-only memory using compact disc), DVD-ROMs (a read-only memory using digital video disc), DVD-RAMs (a writable and readable memory using digital video disc), digital photos, movies, video software, audio software, computer graphics, publishing products, broadcasting programs, commercial messages, game software, etc.; and used as external program recording means for car navigation systems and large-sized computers.

Hereinbefore, the use of the styryl dyes of the present invention in the field of optical recording media has been mainly explained with reference to their application examples to organic ablation type optical recording media which use laser beams with wavelengths around 650 nm as a writing light. However, in the field of optical recording media, the styryl dyes can be advantageously used in not only high-density optical recording media such as DVD-Rs but commonly used optical recording media such as CD-Rs as materials for controlling and calibrating the absorptance and the reflectance by combining with one or more other organic dye compounds sensitive to laser beams with wavelengths of 775-795 nm. Even in the case of using organic ablation type optical recording media which use laser beams with wavelengths around 650 nm as a writing light, pits can be indirectly formed, without directly forming pits on substrates using the styryl dyes, by combining one or more other organic dye compounds sensitive to a longer wavelength

of light, for example, a laser beam with a wavelength of 775-795 nm, in such a manner that an exited energy by laser beams with wavelengths of 650 nm is transferred through the styryl dyes of the present invention to the organic dye compounds to decompose the compounds. The term "optical recording media" as referred to in the present invention means those in general which use the characteristic features of the styryl dyes of the present invention that substantially absorb a visible light with a wavelength around 650 nm, and includes, in addition to the organic ablation type optical recording media, for example, those prepared by the thermal coloration method which uses the chemical reaction of coloring agents and developers induced by the heat generated when the organic dye compounds absorb light, and those prepared by the technique called "moth-eye type technique" which uses the phenomenon that the above heat smooths the pattern of periodical unevenness, provided on the surface of substrates.

The styryl dyes of the present invention substantially absorb a visible light with a wavelength around 650 nm, and therefore in addition to the use of the aforesaid optical recording media, they can be advantageously used as laser action substances in dye lasers and as materials for polymerizing polymerizable compounds by exposure to visible light, sensitizing solar batteries, and for dying clothes. If necessary, in combination with one or more other light absorbents capable of absorbing lights in ultraviolet, visible and/or infrared regions, the light absorbents of the present invention can be used in clothes in general and others of building/bedding/decorating products such as drapes, laces, casements, prints, venetian blinds, roll screens, shutters, shop curtains, blankets, thick bedquilts including comforters, peripheral materials for thick bedquilts, covers for thick bedquilts, cottons for thick bedquilts, bed sheets, Japanese cushions, pillows, pillow covers, cushions, mats, carpets, sleeping bags, tents, interior finishes for cars, and window glasses including car window glasses; sanitary and health goods such as paper diapers, diaper covers, eyeglasses, monocles, and lorgnettes; internal base sheets/linings/materials for shoes; wrappers; materials for umbrellas; parasols; stuffed toys; lighting devices; filters/panels/screens for information displaying devices such as televisions and personal computers which use cathode-ray tubes, liquid crystal displays, electroluminescent displays, and plasma displays; sunglasses; sunroofs; sun visors; pet bottles; storages; vinyl houses; lawns; optical fibers; prepaid cards; and peeping windows of ovens including electric ones. When used for wrapping, injecting, and enclosing the above articles, the light absorbents of the present invention prevent living bodies and products from problems and discomforts induced by environmental lights such as natural- and artificial-lights or minimise the above problems and discomforts. Furthermore they can advantageously regulate the color, tint, and appearance and adjust the light reflected from or passed through the articles to a desired color balance.

The following examples describe the preferred embodiments according to the present invention:

Example 1

Styryl dye

One hundred and fifty milliliters of ethanol were placed in a reaction vessel and mixed with 7.5 g of 1-butyl-2,3,3-trimethyl-3H-benzo[e]indolium=p-toluenesulfon ate and 3.0 g of N,N-dimethylbenzaldehyde. The mixture was reacted for two hours over hot-water bath under stirring conditions. The reaction mixture was filtered while hot, and the filtrate was admixed with five milliliters of an aqueous solution containing 4.2 g of sodium perchlorate and reacted for 30 min over hot-water bath under stirring conditions. The resulting reaction mixture was cooled, and the crystals formed were collected and recrystallized in a solution of methanol and chloroform (=1:1 by volume) to obtain 7.2 g of a bright-golden-yellow crystals of the styryl dye, represented by Chemical Formula 31.

Example 2

Styryl dye

One hundred milliliters of ethanol were placed in a reaction vessel and mixed with 5.0 g of 5-diethylaminosulfonyl-1,2,3,3-tetramethyl-3H-indolium perchlorate and 2.1 g of N,N-dimethylaminobenzaldehyde. The mixture was reacted for two hours over hot-water bath under stirring conditions. The reaction mixture was cooled, and the crystals formed were collected and recrystallized in a mixture solution of methanol and chloroform (=1:1 by volume) to obtain 4.7 g of a bright blue crystal of the styryl dye, represented by Chemical Formula 58.

Example 3

Styryl dye

Three hundred milliliters of acetonitrile were placed in a reaction vessel and mixed with 1.2 g of the styryl dye represented by Chemical Formula 4, and 2.0 g of the azo organic metal complex having light-resistance improving

ability, represented by Chemical Formula 82, was added, and the contents were dissolved. After the solution was heated while stirring at 80°C for one hour, the solvent was removed to obtain 1.6 g of a dark green crystal of the styryl dye of the present invention, represented by Chemical Formula 8.

Chemical Formula 82:

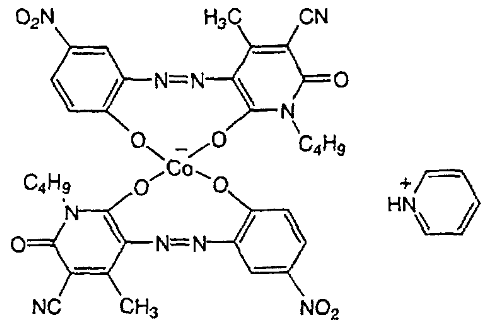

Example 4

Styryl dye

A reaction was carried out and the resulting reaction mixture was treated similarly as in Example 3 except for using as material compounds 2.7 g of the styryl dye, represented by Chemical Formula 58, and 3.0 g of the azo organic metal complex with light-resistance improving ability, represented by Chemical Formula 83, to obtain 3.9 g of a dark green crystal of the styryl dye of the present invention, having an organic metal complex anion as a counter ion, represented by Chemical Formula 59.

Chemical Formula 83:

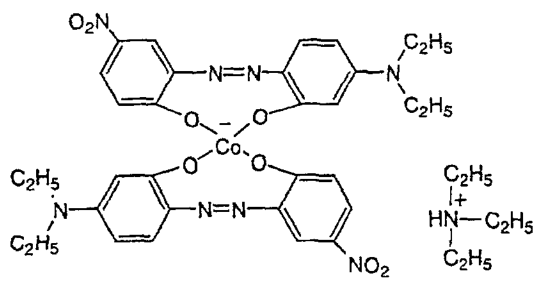

Example 5

Styryl dye

A reaction was carried out and the resulting reaction mixture was treated similarly as in Example 3 except for using as material compounds 1.2 g of the styryl dye, represented by Chemical Formula 4, and 2.0 g of the azo organic metal complex having light-resistance improving ability, represented by Chemical Formula 84, to obtain 1.9 g of a dark green crystal of the styryl dye of the present invention, having an organic metal complex anion as a counter ion, represented by Chemical Formula 7.

Chemical Formula 84:

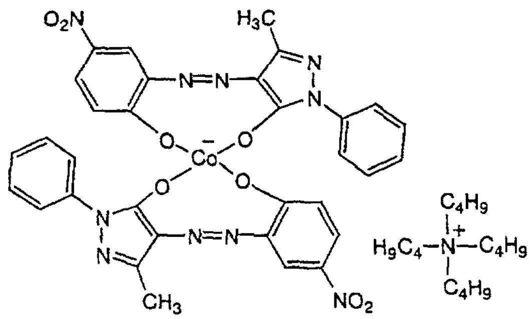

Depending on their structures, the styryl dyes of the present invention may be varied in some degree in their production conditions and product yields . Any one of the styryl dyes including those represented by Chemical Formulae 1 to 81 can be prepared by the methods in Examples 1 to 5 or prepared in accordance therewith.

Example 6

Optical properties of styryl dyes

The styryl dyes in Table 1 and a conventional related compound, represented by Chemical Formula 85, were respectively measured for visible absorption spectra in a usual manner when dissolved in a methanol solution and formed in a thin-layer on a glass substrate. The data of absorption maximum wavelengths for these compounds in their solution and thin layer forms were tabulated in Table 1. FIGs. 1 and 2 are the visible absorption spectra of the styryl dye, represented by Chemical Formula 31, and the conventional related compound represented by Chemical Formula 85, when in a thin-layer form. The styryl dye represented by Chemical Formula 85 is a conventional related compound with reported usefulness in high-density optical recording media.

Chemical Formula 85:

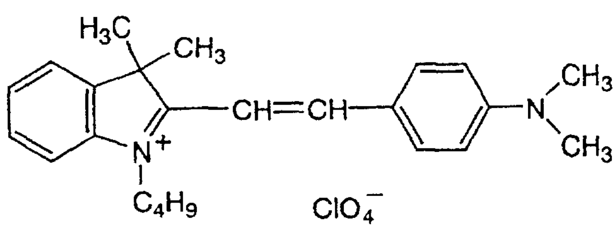

Table 1

| Styryl dye | Wavelength of absorption maximum (nm) | | Melting point (°C) | Decomposition point (°C) | Remarks |
|---|---|---|---|---|---|
| | Solution | Thin layer | | | |
| Chemical Formula 7 | 547 | 607 | * | 304.1 | Present invention |
| Chemical Formula 8 | 514 | 529, 598 | * | 302.2 | Present invention |
| Chemical Formula 31 | 562 | 555, 597 | 259 | 267.0 | Present invention |
| Chemical Formula 32 | 561 | 555, 597 | 251 | 267.0 | Present invention |
| Chemical Formula 34 | 542 | 564 | * | 273.7 | Present invention |
| Chemical Formula 58 | 565 | 550, 590 | * | 260.0 | Present invention |
| Chemical Formula 59 | 549 | 568 | * | 277.8 | Present invention |
| Chemical Formula 85 | 547 | 583 | 225 | 247.0 | Control |

Note : The symbol "*" means that it has no melting point or has a melting point undistinguishable from its decomposition point.

The data on the wavelengths of absorption maxima in Table 1 and the visible absorption spectra in FIGs. 1

and 2 show that the styryl dyes of the present invention have absorption maxima in the visible region similarly as for the conventional related compound, and substantially absorb visible light with a wavelength around 650 nm when in a thin-layer form. Among the tested styryl dyes of the present invention, those represented by Chemical Formulae 7, 8, 31, 32 and 58 showed wavelengths of absorption maxima, which were greatly shifted towards a longer wavelength than that of the conventional related compound represented by Chemical Formula 85, when in a thin-layer form, and showed significantly-high absorptions at a wavelength around 650 nm. These data indicate that the styryl dyes of the present invention exert substantially the same or preferable optical properties as compared with those of conventional related compounds.

Example 7

Thermal properties of styryl dyes

An adequate amount of either of the styryl dyes of the present invention in Table 1, as test specimens, was placed in a vessel and subjected to conventional differential thermal analysis (hereinafter abbreviated as "DTA") and thermogravimetric analysis (hereinafter abbreviated as "TGA") using "MODEL TG/DTA 220", a digital thermo analyzer commercialized by Seiko Instruments Inc., Tokyo, Japan, to determine the melting point, i.e., a temperature at which the styryl dyes as test specimens begin to absorb heat when determined on TGA, and to determine the decomposition point, i.e., a temperature at which the styryl dyes as test specimens begin to reduce the weight when determined on DTA. These data were also in Table 1. The data of the TGA and DTA for the styryl dye of the present invention, represented by Chemical Formula 31, and the conventional related compound, represented by Chemical Formula 85, were respectively shown in FIGs. 3 and 4. In the TGA and DTA, the environmental temperature was set to an increasing temperature mode, a rate of 10°C/min.

As evident from the results in Table 1 and FIG. 4, the conventional related compound represented by the Chemical Formula 85 had a melting point and decomposition point, which were separate from each other, and decomposed very loosely at a temperature around its decomposition point. While all the tested styryl dyes of the present invention promptly decomposed at temperatures around their decomposition points, particularly, the styryl dyes represented by Chemical Formulae 7, 8, 34, 58 and 59 exhibited prompt decomposability as if they instantly decomposed at once when reaching to their decomposition points. All of the tested styryl dyes had distinctively-high decomposition points of 260°C or higher, and particularly those represented by Chemical Formulae 7 and 8 had more distinctively-high decomposition points reaching up to about 300°C. Most specifically, the tested conventional related compound had both melting point and decomposition point which were separate from each other, with a temperature difference of as high as 22°C, while most of the styryl dyes of the present invention had only decomposition points or decomposition points undistinguishable from their melting points. These results indicate that the styryl dyes of the present invention far exceed in thermal properties than conventional related compounds.

As already described, like such a conventional related compound represented by Chemical Formula 85, it is difficult to form minute pits on a restricted recording surface of high-density optical recording media such as DVD-Rs with loosely-decomposing dyes. Varying depending on the glass transition temperature of substrates, when used as a light absorbent in optical recording media, dyes with lower decomposition points can be generally used to write information using low-power laser beams as an advantage. However, as a disadvantage, when exposed to laser beams for a relatively-long period of time on reading, optical recording media processed with such dyes may easily accumulate heat and deform parts around pits and pit-less parts on recording surfaces, resulting in undesirable jitters and reading errors. The styryl dyes of the present invention substantially absorb visible light with a wavelength around 650 nm when in a thin-layer form, have only decomposition points with a relatively-high temperature or such decomposition points undistinguishable from their melting points, and have an outstandingly-high decomposition rate at around their decomposition points. These characteristic features indicate that high-density optical recording media, having a relatively-small jitter, insubstantial reading error, and satisfactory stability against exposure to environmental lights such as reading- and natural-lights, can be obtained by using the styryl dyes of the present invention as light absorbents.

Example 8

Light-resistance improvement for styryl dyes

Fifteen milligrams of either of the styryl dyes in Table 2 as test specimens was added to three milliliters of TFP, and as a light-resistant improver two milligrams of either of a phenylpyridylamine derivative represented by Chemical Formula 86 or a nickel complex with a formazane compound represented by Chemical Formula 87 as a ligand, followed by 5-min ultrasonic energization at ambient temperature to dissolve the contents in the solvent. Thereafter, in a usual manner, a prescribed amount of the resulting solution was dropped on either surface of a polished glass

substrate, 5 cm x 5 cm, while the glass substrate was rotated at a rotation rate of 1,000 rpm for one minute to uniformly coat the solution thereupon, and sequentially blown with hot air and cold air to dry the coated solution.

Chemical Formula 86:

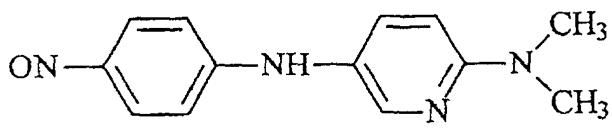

Chemical Formula 87:

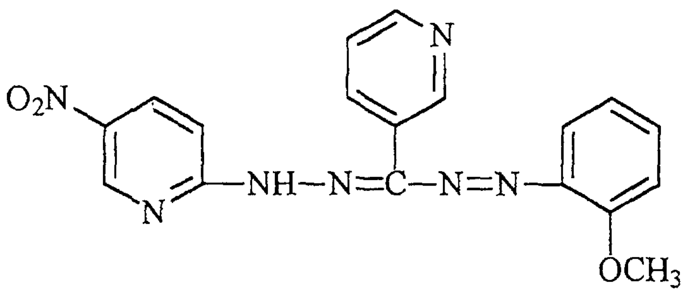

The resulting glass substrates coated with the styryl dyes were measured for transmittance ($T_0$) at a wavelength of 550 nm, and then fixed to a position 7 cm apart from a 500 W xenon lamp and exposed with light for 25 min using the lamp while cold air was blowing to the substrates. Immediately after that, the resulting substrates were remeasured for transmittance (T) at a wavelength of 550 nm, and the transmittances of T and $T_0$ for each styryl dye were substituted for the Equation 1 to calculate the residual percentage (%) of each styryl dye. In parallel, control systems with no light-resistant improver for each styryl dye were provided and treated similarly as above. The results were in Table 2.

Equation 1:

$$\text{Residual percentage of dye (\%)} = \frac{100 - T}{100 - T_0} \times 100$$

Table 2

| Styryl dye | Light-resistant improver | Residual percentage of dye (%) |
|---|---|---|
| Chemical Formula 4 | Addition of the azo metal complex, represented by Chemical Formula 83 | 86.5 |
| Chemical Formula 5 | Combined with azo metal complex anion | 99.2 |
| Chemical Formula 7 | Combined with azo metal complex anion | 99.8 |
| Chemical Formula 8 | Combined with azo metal complex anion | 99.9 |
| Chemical Formula 31 | Non | 45.0 |
| Chemical Formula 31 | Addition of the phenylpyridylamine derivative, represented by Chemical Formula 86 | 66.0 |
| Chemical Formula 31 | Addition of the formazane nickel complex, represented by Chemical Formula 87 | 96.0 |
| Chemical Formula 58 | Non | 10.9 |
| Chemical Formula 58 | Addition of the phenylpyridylamine derivative, represented by Chemical Formula 86 | 75.5 |
| Chemical Formula 59 | Combined with azo metal complex anion | 99.3 |

As shown in the results in Table 2, in the systems with no light-resistant improver, 55-89% of the styryl dyes had changed with only 25-min exposure of light to become incapable of exerting their inherent optical properties.

However, in the systems with the phenylpyridylamine derivative represented by Chemical Formula 86 or the nickel complex with the formazan compound as a ligand, and in the systems with the styryl dyes represented by Chemical Formulae 5, 7, 8 or 59, more than 66% of the initial styryl dyes still remained intact. Particularly, the nickel complex with formazane compound as a ligand and the azo metal complexes showed a remarkable light-resistance improving effect, namely over 96% of each styryl dye still remained intact. These results indicate that nitroso compounds with a phenylpyridylamine skeleton, metal complexes with formazane compounds, and azo metal complexes are distinctively effective in the light-resistance improvement of the styryl dyes of the present invention, particularly, formazane metal complexes and azo metal complexes, combined with or without the styryl dyes, remarkably exert such improvement.

Example 9

Optical recording medium

Either of the styryl dyes, represented by Chemical Formulae 31, 32 and 58, as light absorbents, was added to TFP to give a concentration of 3.0% (w/w), and further admixed with the nickel complex with formazane compound, represented by Chemical Formula 87, disclosed in Japanese Patent Application No. 163,036/99, titled "Formazane metal complex" applied for by the same applicant as the present invention, to give a concentration of 0.35% (w/w), followed by heating and ultrasonically dissolving the contents. According to a usual manner, the resulting solution was filtered with a membrane, and the filtrate was homogeneously coated on either surface of a polycarbonate disc substrate, 12 cm in diameter and 0.6 mm in thickness, which concaves, 0.74 μm in track pitch, 0.3 μm in wide, and 76 nm in width, for expressing synchronizing signals and addresses of tracks and sectors had been transferred to the track's internal circuit, and dried to form a recording layer, 100 nm in thickness. Thereafter, the resulting substrate was deposited with gold to form a reflection layer, 100 nm in thickness, to be attached closely on the surface of the recording layer, and the reflection layer was homogeneously coated in a rotatory manner with "DAICURE CLEAR SD1700", as a known ultraviolet ray hardening resin commercialized by Dainippon Ink and Chemicals, Inc., Tokyo, Japan, and irradiated to form a protective layer to be attached closely on the surface of the reflection layer, followed by closely attaching on the protective layer a polycarbonate disc as a protection substrate, 12 cm in diameter and 0.6 mm in thickness. Thus, different types of optical recording media were prepared.

The optical recording media thus obtained have a recording capacity of over 4 GB and can record a large amount of information in the form of documents, images, voices, and other digital data at a relatively-high density by using laser elements with an oscillation wavelength of 650 nm. Electron microscopic observation of the recorded surface of the optical recording media of this example, which had been written information by using a semiconductor laser element with an oscillation wavelength of 658 nm, revealed the formation of minute pits below 1 μm/pit at a track pitch of below 1 μm and at a relatively-high density.

Example 10

Optical recording medium

Either of the styryl dyes, represented by Chemical Formulae 7, 8, 34 and 59, as light absorbents, was added to TFP to give a concentration of 2% (w/w), and then heated and energized with ultrasound to dissolve the styryl dye. In a conventional manner, the resulting solution was filtered with a membrane, and the filtrate was homogeneously coated on either surface of a polycarbonate disc substrate, 12 cm in diameter and 0.6 mm in thickness, which concaves for expressing synchronizing-signals and addresses of tracks and sectors had been transferred to the track's internal circuit, and dried to form a recording layer, 120 nm in thickness. Thereafter, the resulting substrate was deposited with silver to form a reflection layer, 100 nm in thickness, to be attached closely on the surface of the recording layer, and the reflection layer was homogeneously coated in a rotatory manner with "DAICURE CLEAR SD1700", as a known ultraviolet ray hardening resin commercialized by Dainippon Ink and Chemicals, Inc., Tokyo, Japan, and irradiated to form a protective layer to be attached closely on the surface of the reflection layer, followed by closely attaching to the protective layer a polycarbonate disc as a protective substrate, 12 cm in diameter and 0.6 mm in thickness. Thus, four types of optical recording media were prepared.

The optical recording media thus obtained have a recording capacity of over 4 GB and can record a large amount of information in the form of documents, images, voices, and other digital data at a relatively-high density by using laser elements with an oscillation wavelength of 650 nm. Electron microscopic observation of the recorded surface of the optical recording media of this example, which had been written information by using a semiconductor laser element with an oscillation wavelength of 658 nm, revealed the formation of minute pits below 1 μm/pit at a track pitch of below 1 μm and at a relatively-high density.

Industrial Applicability

As described above, the present invention was made based on the creation of novel styryl dyes and their industrially useful properties. The styryl dyes of the present invention have absorption maxima in the visible region and substantially absorb light with a wavelength around 650 nm when in a thin-layer form. In addition, the styryl dyes have only decomposition points or decomposition points which are undistinguishable from their melting points, and most of the styryl dyes have relatively-high decomposition points, heat tolerance, and instantly decompose at around their decomposition points. Based on these properties, the styryl dyes of the present invention have diversified uses in the fields of optical recording media, photochemical polymerization, solar batteries, dyeing, etc., which need organic dye compounds having such properties, particularly, in the field of optical recording media, the styryl dyes are outstandingly useful as light absorbents in high-density optical recording media in which minute pits must be stably and promptly formed on a restricted recording surface at a relatively-high density when in writing information, for example, as used in DVD-Rs.

As compared with optical recording media now used which have polymethine dyes as light absorbents and write information using laser beams with wavelengths of 775 nm or 795 nm, the optical recording media of the present invention, which have the styryl dyes of the present invention as light absorbents and write information using laser beams at wavelengths around 650 nm, can stably and promptly form minute pits at a relatively-narrower track pitch and a relatively-high density, and can record a vast amount of information of characters, images, voices, and other digital data at a relatively-high density, resulting in greatly lowering the cost of recording information per bit as a merit.

The styryl dyes with such usefulness can be easily obtained in a desired amount by the process of the present invention which comprises a step of reacting an aromatic amine compound having an aldehyde group with either a 3,3-dimethylbenzoindolium compound having an active methyl group or a 3,3-dimethylindolium compound having an aminosulfonyl group.

The present invention having such outstanding effects and functions is a significant invention that will greatly contribute to this art.

### Claims

1. A dimethine styryl dye represented by any one of Formulae 1 to 3:

Formula 1:

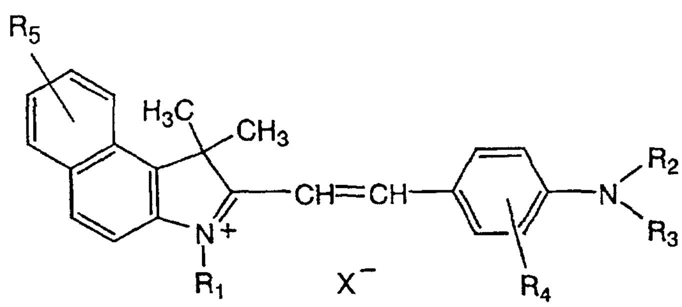

Formula 2:

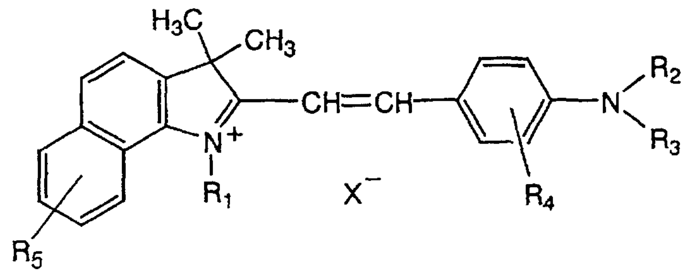

Formula 3:

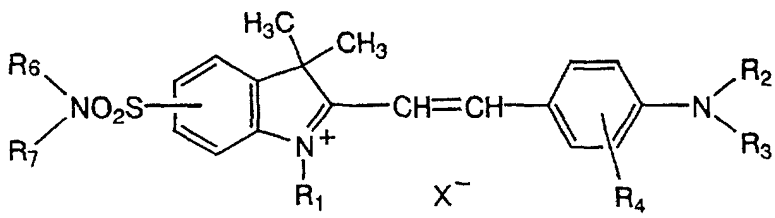

wherein in Formulae 1 to 3, $R_1$ denotes an aliphatic hydrocarbon group which may have a substituent; $R_2$ and $R^3$ each identically or differently denote an aliphatic hydrocarbon group or an aromatic hydrocarbon group, which may have a substituent or may form a ring structure together with only the nitrogen atom to which they are attached or with the benzene ring to which the nitrogen atom is attached; $R_4$ and $R_5$ each independently denote a hydrogen atom or an appropriate substituent; $X^-$ denotes an appropriate counter ion; and in Formula 3, $R_6$ and/or $R_7$ denote an aliphatic hydrocarbon or an alicyclic hydrocarbon or may bind together to form a cyclic structure, or when either of $R_6$ and $R_7$ denotes a hydrocarbon group, the other denotes a hydrogen atom.

**2.** The dimethine styryl dye of claim 1, which substantially absorbs a visible light with a wavelength around 650 nm when in a thin-layer form.

**3.** The dimethine styryl dye of claim 1 or 2, which has only a decomposition point or a decomposition point undistinguishable from its melting point.

**4.** The dimethine styryl dye of claim 1, 2 or 3, which has a decomposition point of at least 250°C.

**5.** The dimethine styryl dye of claim 1, 2, 3 or 4, wherein said counter ion is an organic metal complex anion with light-resistance improving ability.

**6.** The dimethine styryl dye of claim 1, 2, 3, 4 or 5, wherein said counter ion is an azo organic metal complex anion.

**7.** A dimethine styryl dye which has only a decomposition point or a decomposition point undistinguishable from its melting point, and which substantially absorbs a visible light with a wavelength around 650 nm.

**8.** The dimethine styryl dye of claim 7, which is represented by any one of Formulae 1 to 3:

Formula 1:

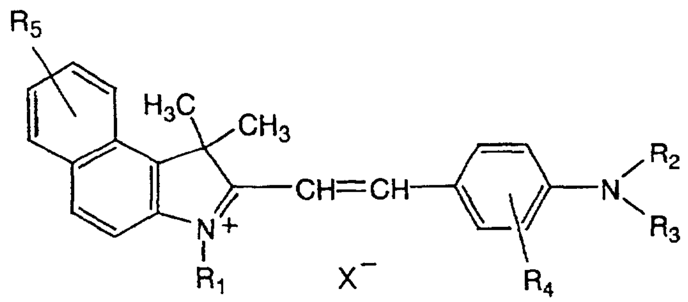

Formula 2:

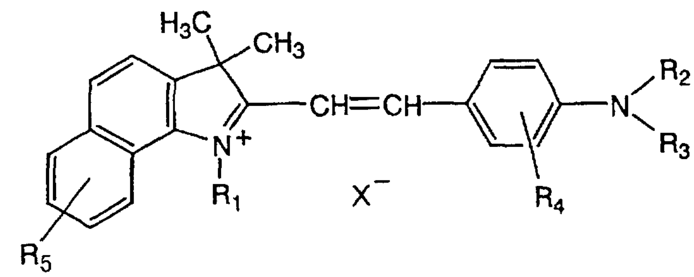

Formula 3:

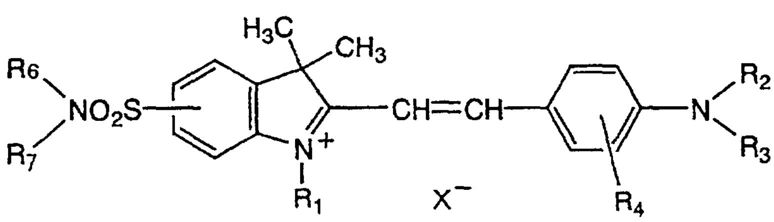

wherein in Formulae 1 to 3, $R_1$ denotes an aliphatic hydrocarbon group which may have a substituent; $R_2$ and $R^3$ each identically or differently denote an aliphatic hydrocarbon group or an aromatic hydrocarbon group which may have a substituent or may form a ring structure together with only the nitrogen atom to which they are attached or with the benzene ring to which the nitrogen atom is attached; $R_4$ and $R_5$ each independently denote a hydrogen atom or an appropriate substituent; $X^-$ denotes an appropriate counter ion; and in Formula 3, $R_6$ and/or $R_7$ denote an aliphatic hydrocarbon or an alicyclic hydrocarbon or may bind together to form a cyclic structure, or when either of $R_6$ and $R_7$ denotes a hydrocarbon group, the other denotes a hydrogen atom.

**9.** The dimethine styryl dye of claim 7 or 8, which has a decomposition point of at least 250°C.

**10.** The dimethine styryl dye of claim 7, 8 or 9, wherein said counter ion is an organic metal complex anion with light-resistance improving ability.

**11.** The dimethine styryl dye of claim 7, 8, 9, 9 or 10, wherein said counter ion is an azo organic metal complex anion.

**12.** A light absorbent comprising the dimethine styryl dyes of any one of claims 1 to 11.

**13.** The light absorbent of claim 12, which comprises the dimethine styryl dyes of any one of claims 1 to 11 and one or more other organic dye compounds sensitive to a visible light.

**14.** The light absorbent of claim 12 or 13, which comprises the dimethine styryl dyes of any one of claims 1 to 11 and one or more appropriate light-resistant improvers.

**15.** The light absorbent of claim 12, 13 or 14, which is sensitive to a laser beam with a wavelength around 650 nm when in a thin-layer form.

**16.** An optical recording medium comprising the dimethine styryl dye of any one of claims 1 to 11.

**17.** The optical recording medium of claim 16, which has a recording layer comprising the dimethine styryl dye of any one of claims 1 to 11 and one or more other organic dye compounds sensitive to a visible light.

**18.** The optical recording medium of claim 16 or 17, which has a recording layer comprising the dimethine styryl dye of any one of claims 1 to 11 and one or more appropriate light-resistant improvers.

**19.** The optical recording medium of claim 16, 17 or 18, which uses a laser beam with a wavelength around 650 nm as a writing light.

**20.** A process for producing the dimethine styryl dye of any one of claims 1 to 11, which comprises a step of reacting a compound, represented by any one of Formulae 4 to 6 having $R_1$ and $R_5$ to $R_7$ corresponding to Formulae 1 to 3, with a compound represented by Formula 7 having $R_2$ to $R_4$ corresponding to Formulae 1 to 3:

Formula 4:

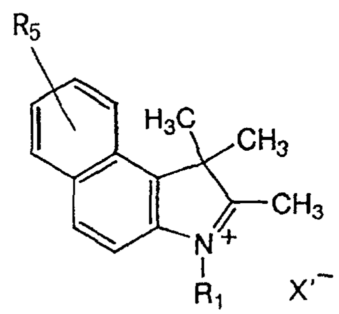

Formula 5:

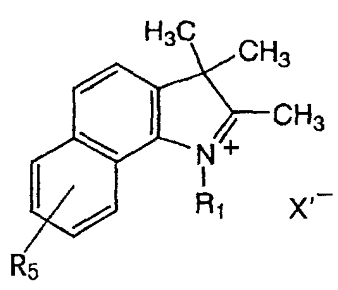

Formula 6:

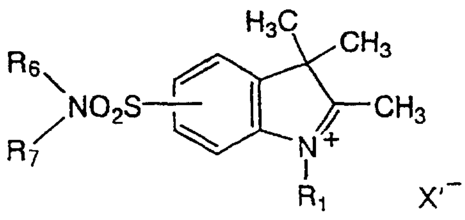

Formula 7:

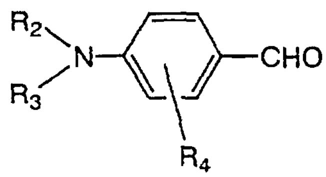

wherein in Formulae 4 to 6, X' denotes an appropriate counter ion.

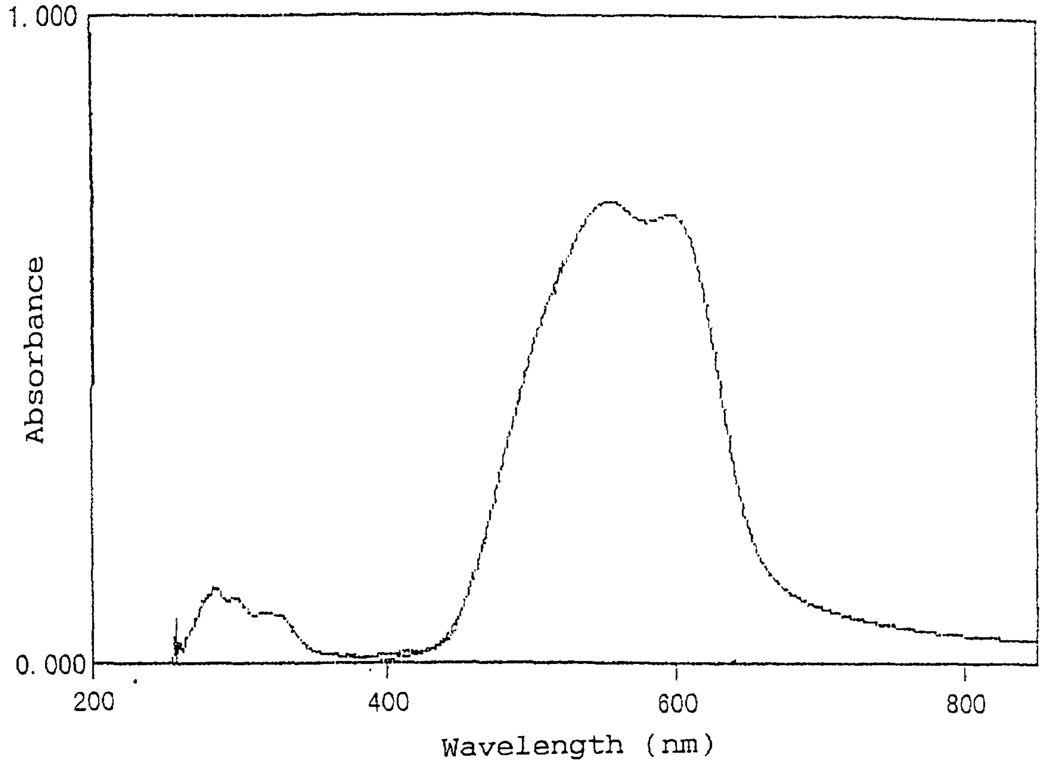
1.000
Absorbance
0.000
200
400
600
800
Wavelength (nm)

FIG. 1

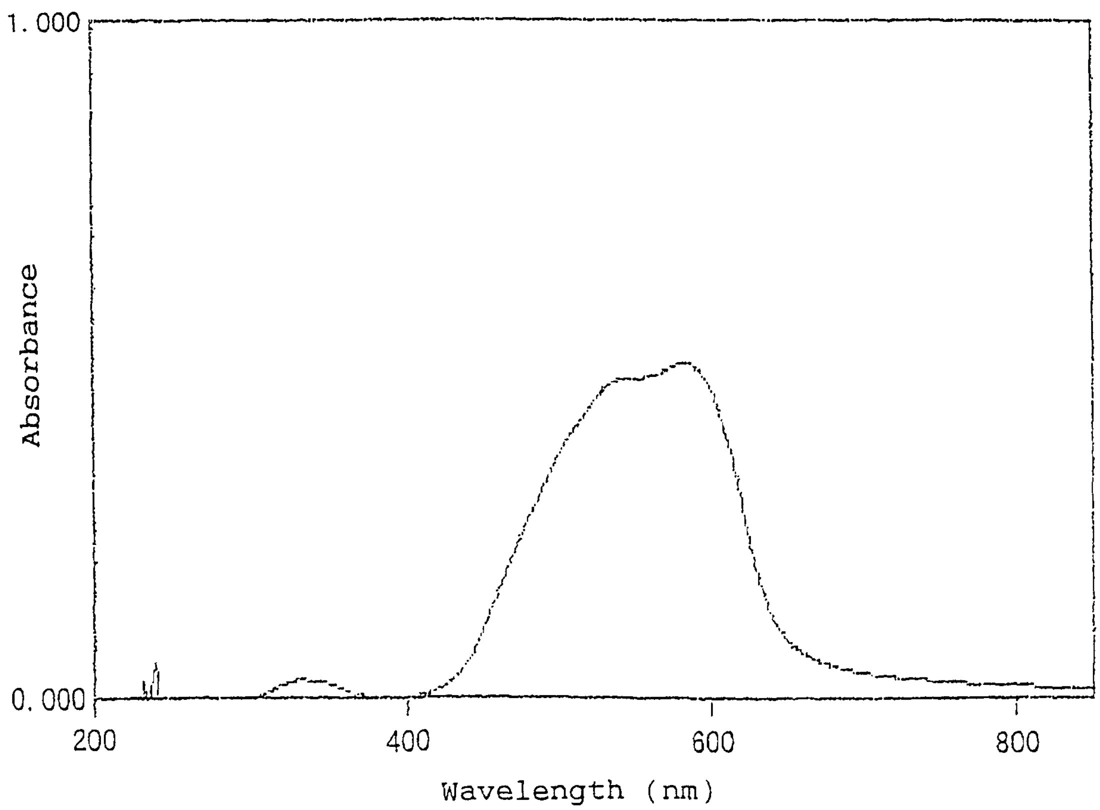
1.000
Absorbance
0.000
200
400
600
800
Wavelength (nm)

FIG. 2

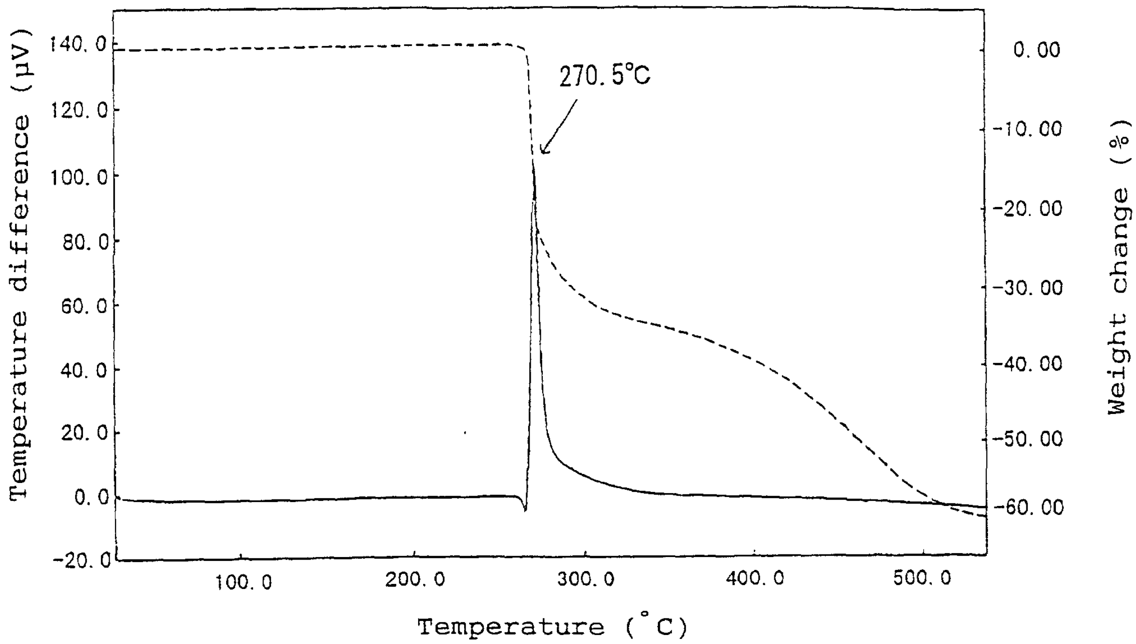
Temperature difference (μV)
140.0
120.0
100.0
80.0
60.0
40.0
20.0
0.0
-20.0
270.5°C
0.00
-10.00
-20.00
-30.00
-40.00
-50.00
-60.00
Weight change (%)
100.0
200.0
300.0
400.0
500.0
Temperature (°C)

FIG. 3

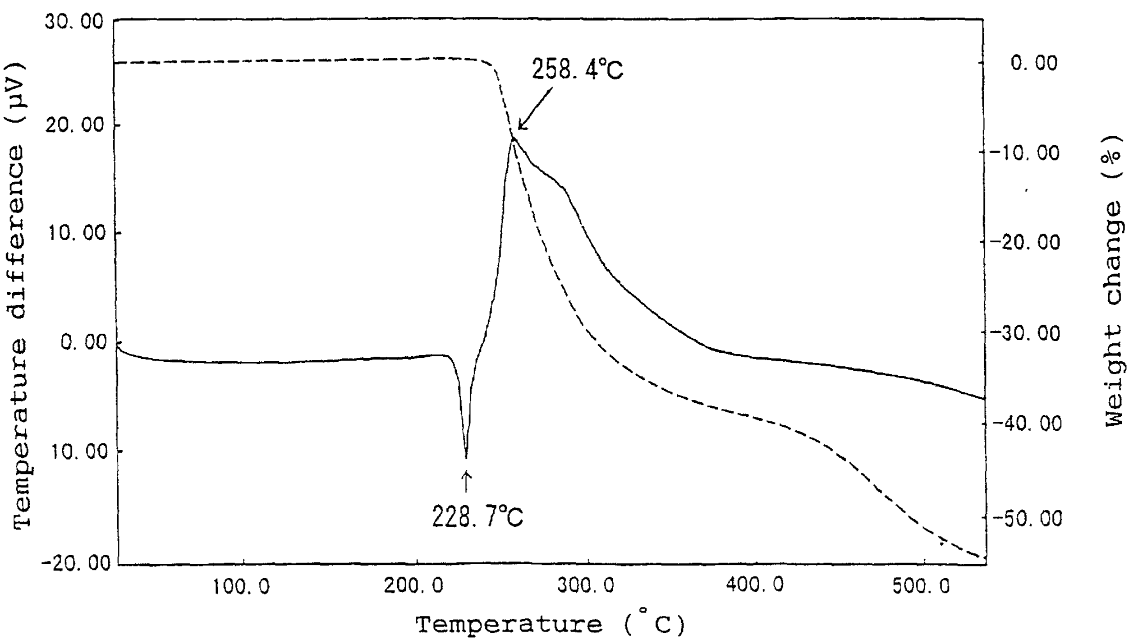
Temperature difference (μV)
30.00
20.00
10.00
0.00
10.00
-20.00
258.4°C
228.7°C
0.00
-10.00
-20.00
-30.00
-40.00
-50.00
Weight change (%)
100.0
200.0
300.0
400.0
500.0
Temperature (°C)

FIG. 4

## INTERNATIONAL SEARCH REPORT

International application No.
PCT/JP00/06312

A. CLASSIFICATION OF SUBJECT MATTER
Int.Cl[7] C09B23/14, B41M5/26

According to International Patent Classification (IPC) or to both national classification and IPC

B. FIELDS SEARCHED

Minimum documentation searched (classification system followed by classification symbols)
Int.Cl[7] C09B23/14, B41M5/26

Documentation searched other than minimum documentation to the extent that such documents are included in the fields searched

Electronic data base consulted during the international search (name of data base and, where practicable, search terms used)
CAPLUS(STN),REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | GB, 2004380, A (Eastman Kodak Company),<br>19 September, 1978 (19.09.78)<br>& JP, 54-56818, A & DE, 2840634, A1 | 1-11<br>12-20 |
| X<br>A | GB, 1466440, A (FUJI PHOTO FILM CO., LTD.),<br>27 September, 1974 (27.09.74)<br>& JP, 50-59418, A & US, 3996215, A | 1-11<br>12-20 |
| X<br>A | GB, 1372622, A (SANDOZ LTD.),<br>03 January, 1972 (03.01.72)<br>& US, 3957767, A & DE, 2200027, A1 | 1-11<br>12-20 |
| X<br>A | JP, 2-179617, A (Matsushita Electric Ind. Co., Ltd.),<br>12 July, 1990 (12.07.90) (Family: none) | 1-11<br>12-20 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>22 December, 2000 (22.12.00) | Date of mailing of the international search report<br>16 January, 2001 (16.12.01) |
|---|---|
| Name and mailing address of the ISA/<br>Japanese Patent Office<br><br>Facsimile No. | Authorized officer<br><br><br>Telephone No. |

Form PCT/ISA/210 (second sheet) (July 1992)